# EUROPEAN PATENT SPECIFICATION

(11) **EP 4 155 085 B1**
(45) Date of publication and mention of the grant of the patent: **26.03.2025**
(21) Application number: 22195553.7
(22) Date of filing: 14.09.2022
(51) Int. Cl.: B41J 2/175

(54) **RECORDING APPARATUS, CONSUMABLE FOR RECORDING APPARATUS, AND INFORMATION PROCESSING METHOD**
AUFZEICHNUNGSGERÄT, VERBRAUCHSMATERIAL FÜR EIN AUFZEICHNUNGSGERÄT UND INFORMATIONSVERARBEITUNGSVERFAHREN
APPAREIL D'ENREGISTREMENT, CONSOMMABLE POUR APPAREIL D'ENREGISTREMENT ET PROCÉDÉ DE TRAITEMENT D'INFORMATIONS

(30) Priority: 28.09.2021 JP 2021158536
(43) Date of publication of application: 29.03.2023
(73) Proprietor: BROTHER KOGYO KABUSHIKI KAISHA, Aichi-ken 467-8561 (JP)
(72) Inventor: MORI, Tetsunori, Nagoya-shi, Aichi, 467-8562 (JP); KIMOTO, Taichiro, Nagoya-shi, Aichi, 467-8562 (JP); SASAKI, Zenichiro, Nagoya-shi, Aichi, 467-8562 (JP)
(74) Representative: Kuhnen & Wacker Patent- und Rechtsanwaltsbüro PartG mbB

(56) References cited:
- JP-A- 2000 019 803
- US-B2- 10 488 804
- US-B2- 10 843 478
- US-B2- 7 796 286

## Description

### TECHNICAL FIELD

The present disclosure relates to a recording apparatus configured to perform information processing relating to a consumable to be detachably attached, a consumable for the recording apparatus, and an information processing method.

### BACKGROUND ART

In the related art, for example, as described in JP-A-H09-114334, a consumable of a recording apparatus enabling recycling or reusing of a consumable once used, from standpoints of environmental protection and ecology, is known. In JP-A-H09-114334, a cartridge is mentioned as an example of the consumable.

US 7 796 286 B2 discloses an image forming apparatus including a judging unit that judges whether a replacement part attached to the image forming apparatus needs replacement based on consumption information indicative of how much the replacement part has been consumed. The replacement part includes a storage unit that stores therein information including identification information unique to the replacement part. When the judging unit judges that the replacement part needs replacement, a reading unit reads the identification information from the replacement part, and an encrypting unit encrypts a predetermined piece of information in the replacement part based on the identification information read by the reading unit.

JP 2000 019803 A discloses a process cartridge which can be attached/detached to/from a color laser beam printer provided with a memory for storing functional information for the use of the cartridge. The memory is provided with a region 507 for recording a cumulative using time for showing the service condition of the cartridge and a region 501 for storing the information for showing the number of the recycling times of the memory as the information for showing the memory service condition of the memory. In the color laser beam printer, the cumulative using time of the region 507 is updated on the basis of the using time of the cartridge. When the cartridge is used for recycling, it is decided whether the recycling of the memory is possible or not based on the number of the recycling times stored in the region 501.

US 10 843 478 B2 discloses a printing apparatus comprising a print unit that performs printing using a consumable, a determiner that determines that a remaining amount of the consumable in a container housing the consumable is lower than an amount, and a controller that, upon a condition where it is determined that the remaining amount of the consumable is less than the amount and it is determined that order information for the consumable is yet to be transmitted, causes the order information of the consumable to be transmitted, and causes a memory provided in the container to store information indicating that the order information has been sent, wherein, if the information indicating that the order information has been sent is not stored in the memory, the controller determines that the order information is yet to be transmitted.

US 10 488 804 B2 discloses a management server of the management system receiving event information related to the replacement of a toner bottle mounted on a printing apparatus. After receiving event information, if the received event information is an alarm indicating the detection of a failure in a memory tag of the toner bottle, the management server generates a preliminary delivery alarm that provides an instruction to deliver the toner bottle.

As described in JP-A-H09-114334, when intending to reuse the consumable of the recording apparatus, the reusing is usually performed at a dedicated recycling factory. At the recycling factory, after used consumables in which consumable materials such as ink and toner are empty are collected, the consumables are made as recycled products (reused products) by re-dispensing consumable materials into the respective consumable so that users can use the products.

On the other hand, in recent years, a configuration is suggested in which, in order to properly and efficiently manage a consumable material in a consumable in a recording apparatus, a consumable memory is provided on the consumable-side, a communication unit is provided on a recording apparatus main body-side and various information is transmitted and received between the communication unit and the consumable memory by communication. In this case, the consumable memory stores use amount information representing, for example, a remaining amount and a used amount of the internal consumable material. As the consumable is mounted on the main body of the recording apparatus and the remaining amount of the consumable material is reduced, communication is performed from the communication unit in the main body of the recording apparatus to the consumable memory at an appropriate timing, so that the use amount information stored in the consumable memory is updated. As a result, in the consumable after use, the remaining amount represented by the use amount information in the consumable memory is almost zero.

When performing the above-described reusing for the consumable provided with such a consumable memory, the consumable is refilled with the consumable material by the re-dispensing described above. For this reason, it is necessary to perform initialization, such as returning the use amount information to a content corresponding to the filled state, i.e., for example, a 100% notation representing a full state.

However, since an amount of the consumable material required for re-dispensing may differ depending on a type and a size of the consumable, and the required communication specification and the like may differ depending on the specification of the consumable memory, a processing burden at the recycling factory may increase. In particular, in order to widely spread the reuse of consumables, it is necessary for as many waste disposal companies as possible to handle the recycling at the recycling factory. However, depending on the scale, capacity and the like of the disposal companies, there is a risk that the increase in the processing burden will be a hamper.

### SUMMARY OF INVENTION

An object of the present disclosure is to provide a recording apparatus, a consumable for a recording apparatus, and an information processing method capable of reducing a processing load on a consumable memory at a recycling factory. The invention is defined in the appended independent claims. Further developments of the invention are specified in the dependent claims.

A first aspect of the present disclosure is a recording apparatus including: a main body of the recording apparatus; and a consumable configured to be detachably attached to the main body of the recording apparatus, in which the consumable has at least a consumable memory that stores use amount information of a consumable material included in the consumable and recycling history information of the consumable, in which the main body of the recording apparatus has a communication unit configured to communicate with the consumable memory, and a processor, and in which the processor is configured to perform: first acquisition processing of acquiring the recycling history information from the consumable memory of the consumable mounted on the main body of the recording apparatus by communication via the communication unit; and determination processing of determining whether or not to perform initialization processing of initializing a value of the use amount information stored in the consumable memory, according to the acquired recycling history information.

In the aspect, the use amount information of the consumable and the recycling history information of the consumable are stored in the consumable memory. The use amount information in the stored contents is processed by the initiative of the recording apparatus-side.

By performing the first acquisition processing, the processor of the recording apparatus communicates with the consumable memory of the consumable mounted on the main body of the recording apparatus via the communication unit, and acquires the recycling history information.

The processor performs the determination processing of determining whether or not to perform the initialization processing of initializing the value of the use amount information stored in the consumable memory, based on the acquired recycling history information. When it is determined to perform the initialization processing, the initialization processing of the value of the use amount information in the consumable memory is performed.

In the recording apparatus of the first aspect, the recycling history information includes: a first information part representing whether the consumable is a recycled product with a recycling history or a brand-new product without the recycling history; and a second information part representing whether the consumable is an initialized recycled product with an initialization history of the use amount information or an uninitialized recycled product without the initialization history, in a case where the consumable is the recycled product.

In the recording apparatus of the first aspect, the processor is configured to determine not to perform the initialization processing in the determination processing, in a case where the acquired recycling history information represents that the consumable is the initialized recycled product or that the consumable is the brand-new product.

In the recording apparatus of the first aspect, the processor is configured to determine to perform the initialization processing in the determination processing, in a case where the acquired recycling history information represents that the consumable is the uninitialized recycled product.

In the recording apparatus of the first aspect, the consumable has a controller configured to control reading and writing of information with respect to the consumable memory, in which the consumable memory has: a first storage area in which the recycling history information is stored; and a second storage area in which the use amount information is stored, in which the main body of the recording apparatus further has a main body memory that stores a use amount initial value of each of a plurality of types of the consumables in a recycling completion state, and in which the processor is further configured to perform first initialization command transmission processing of transmitting, to the controller via the communication unit, a first initialization command for writing the use amount initial value acquired from the main body memory to the second storage area of the consumable memory to initialize the value of the use amount information.

In the recording apparatus of the first aspect, in which the consumable memory further has a third storage area in which capacity information of the corresponding consumable is stored, and in which the processor is further configured to: transmit, to the controller via the communication unit, a first transmission command for reading out and transmitting the recycling history information and the capacity information from the first storage area and the third storage area of the consumable memory, to acquire the recycling history information and the capacity information transmitted from the controller in response to the first transmission command, in the first acquisition processing; perform second acquisition processing of acquiring, from the main body memory, the use amount initial value corresponding to the capacity information acquired from the controller of the consumable memory; and transmit, to the controller via the communication unit, the use amount initial value acquired from the main body memory in the second acquisition processing, in the first initialization command transmission processing.

In the recording apparatus of the first aspect, the consumable has a controller configured to control reading and writing of information with respect to the consumable memory, the consumable memory has: a first storage area in which the recycling history information is stored; a second storage area in which the use amount information is stored; and a fourth storage area in which a use amount initial value of the corresponding consumable in a recycling completion state is stored, and the processor is further configured to: transmit, to the controller via the communication unit, a second transmission command for reading out and transmitting the recycling history information and the use amount initial value from the first storage area and the fourth storage area of the consumable memory, to acquire the recycling history information and the use amount initial value transmitted from the controller in response to the second transmission command, in the first acquisition processing; and perform second initialization command transmission processing of transmitting, to the controller via the communication unit, a second initialization command for writing the acquired use amount initial value to the second storage area of the consumable memory to initialize the value of the use amount information.

In the recording apparatus of the first aspect, the consumable has a controller configured to control reading and writing of information with respect to the consumable memory, the consumable memory has: a first storage area in which the recycling history information is stored, a second storage area in which the use amount information is stored; and a fourth storage area in which a use amount initial value of the corresponding consumable in a recycling completion state is stored, and the processor is further configured to: transmit, to the controller via the communication unit, a third transmission command for reading out and transmitting the recycling history information from the first storage area of the consumable memory, to acquire the recycling history information transmitted from the controller in response to the third transmission command, in the first acquisition processing; and perform third initialization command transmission processing of transmitting, to the controller via the communication unit, a third initialization command for reading out the use amount initial value stored in the fourth storage area of the consumable memory and writing the read use amount initial value to the second storage area of the consumable memory to initialize the value of the use amount information, in a case of acquiring the recycling history information.

A second aspect of the present disclosure is a consumable for a recording apparatus, the consumable configured to be detachably attached to a main body of the recording apparatus and comprising a consumable memory configured to communicate with the recording apparatus and a controller configured to control reading and writing of information with respect to the consumable memory, in which the consumable memory has: first storage area in which recycling history information of the consumable is stored, the recycling history information including a first information part representing whether the consumable is a recycled product with a recycling history or a brand-new product without the recycling history, and a second information part representing whether the consumable is an initialized recycled product with an initialization history of use amount information of a consumable material included in the consumable or an uninitialized recycled product without the initialization history, in a case where the consumable is the recycled product; a second storage area in which the use amount information is stored; and any one storage area of a third storage area in which capacity information of the consumable is stored and a fourth storage area in which a use amount initial value of the consumable in a recycling completion state is stored, and in which the controller is configured to perform use amount information writing processing of writing a predetermined use amount initial value to the second storage area, in response to receiving a command transmitted from the recording apparatus.

In the consumable for the recording apparatus of the second aspect, in response to receiving a first transmission command transmitted from the recording apparatus, the controller is configured to read out the recycling history information and the capacity information from the first storage area and the third storage area, to transmit the read recycling history information and the read capacity information to the recording apparatus, and in response to receiving a first initialization command as the command, the controller is configured to write the use amount initial value included in the first information command and corresponding to the capacity information to the second storage area, to initialize a value of the use amount information.

In the consumable for the recording apparatus of the second aspect, in response to receiving a second transmission command transmitted from the recording apparatus, the controller is configured to read out the recycling history information and the use amount initial value from the first storage area and the fourth storage area, to transmit the read recycling history information and the read use amount initial value to the recording apparatus, and in response to receiving a second initialization command as the command, the controller is configured to write the use amount initial value included in the second initialization command to the second storage area, to initialize a value of the use amount information.

In the consumable for the recording apparatus of the second aspect, in response to receiving a third transmission command transmitted from the recording apparatus, the controller is configured to read out the recycling history information from the first storage area, to transmit the read recycling history information to the recording apparatus, and in response to receiving a third initialization command as the command, the controller is configured to read out the use amount initial value stored in the fourth storage area and write the read use amount initial value to the second storage area, to initialize a value of the use amount information.

A third aspect of the present disclosure is an information processing method of performing predetermined processing on use amount information of a consumable material included in a consumable and recycling history information of the consumable, the use amount information and the recycling history information being stored in a consumable memory provided to the consumable configured to be detachably attached to a main body of a recording apparatus, the information processing method including the steps of: acquiring the recycling history information from the consumable memory by communication; and determining whether or not to perform initialization processing of initializing a value of the use amount information stored in the consumable memory, according to the acquired recycling history information.

In the information processing method, the recycling history information includes: a first information part representing whether the consumable is a recycled product with a recycling history or a brand-new product without the recycling history; and a second information part representing whether the consumable is an initialized recycled product with an initialization history of the use amount information or an uninitialized recycled product without the initialization history, in a case where the consumable is the recycled product, and it is determined not to perform the initialization processing in the determination step, in a case where the acquired recycling history information represents that the consumable is the initialized recycled product or that the consumable is the brand-new product.

In the information processing method, it is determined to perform the initialization processing in the determination step, in a case where the acquired recycling history information represents that the consumable is the uninitialized recycled product.

According to the first to third aspects, since the recording apparatus identifies the recycling history of consumable and the value of the use amount information is accordingly initialized as appropriate, it is not necessary to initialize the use amount information at the recycling factory, and it is sufficient to perform the simple processing of just updating the recycling history information. According to the first to third aspects, it is possible to reduce the processing load at the recycling factory.

According to the first to third aspects, it is possible to reduce the processing load on the consumable memory at the recycling factory.

### BRIEF DESCRIPTION OF DRAWINGS

FIG. 1A is a functional block diagram showing an overall schematic configuration of a complex machine according to an embodiment of the present disclosure. FIG. 1B is a functional block diagram showing a schematic configuration of an ink cartridge.
FIG. 2 illustrates a flow of recycling processing and reuse of an ink cartridge in Comparative Example.
FIG. 3 illustrates a flow of recycling processing and reuse of the ink cartridge in the embodiment of the present disclosure.
FIG. 4A is a flowchart showing a control procedure performed by a processor of the complex machine. FIG. 4B is a flowchart showing a subroutine in the control procedure shown in FIG. 4A.
FIG. 5 shows a use amount initial value table stored in the complex machine.
FIG. 6 is a flowchart showing a control procedure performed by a controller of the ink cartridge.
FIG. 7A is a functional block diagram showing an overall schematic configuration of a complex machine according to an embodiment of the present disclosure. FIG. 7B is a functional block diagram showing a schematic configuration of an ink cartridge in which the use amount information is stored in a cartridge memory.
FIG. 8A is a flowchart showing a control procedure performed by a processor of the complex machine. FIG. 8B is a flowchart showing a subroutine in the control procedure shown in FIG. 8A.
FIG. 9 is a flowchart showing a control procedure performed by the controller of the ink cartridge.
FIG. 10A is a flowchart showing a control procedure performed by the processor of the complex machine in an embodiment of transmitting a command for coping data from the complex machine to an ink cartridge. FIG. 10B is a flowchart showing a subroutine in the control procedure shown in FIG. 10A.
FIG. 11 is a flowchart showing a control procedure performed by the controller of the ink cartridge.

### DESCRIPTION OF EMBODIMENTS

An embodiment of the present disclosure will be described with reference to the drawings.

### <Complex Machine>

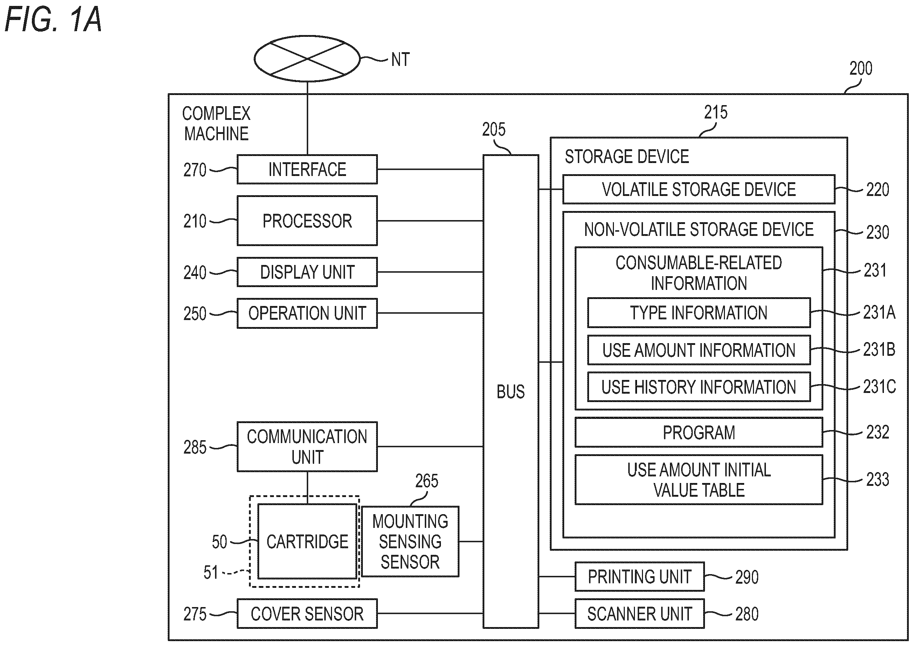

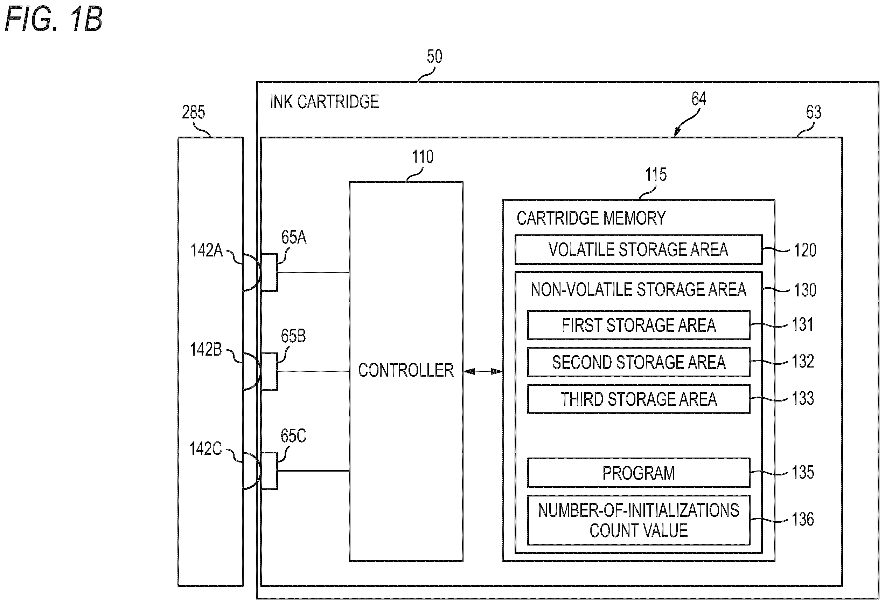

A schematic configuration of a complex machine 200 according to one embodiment of the present disclosure is shown in FIG. 1A, and a detailed configuration of an ink cartridge 50 provided to the complex machine 200 is shown in FIG. 1B. Note that, the complex machine 200 is an example of a main body of a recording apparatus. The ink cartridge 50 is an example of a consumable for the recording apparatus.

As shown in FIG. 1A, the complex machine 200 includes a scanner unit 280, a printing unit 290, a processor 210, a storage device 215, a display unit 240, an operation unit 250, a communication unit 285, a mounting detecting sensor 265, a communication interface 270, and a cover sensor 275. The scanner unit 280, the printing unit 290, the processor 210, the storage device 215, the display unit 240, the operation unit 250, the communication unit 285, the mounting detecting sensor 265, the cover sensor 275, and the communication interface 270 are connected to each other via a bus 205.

### <Storage Device>

The storage device 215 includes a volatile storage device 220 and a non-volatile storage device 230. The storage device 215 is an example of the main body memory. The volatile storage device 220 is, for example, a DRAM. The non-volatile storage device 230 is, for example, a flash memory. The non-volatile storage device 230 has a consumable-related information storage area 231 for storing consumable-related information relating to the ink cartridge 50, a program storage area 232, and a storage area 233 of a use amount initial value table, which will be described later.

The consumable-related information storage area 231 has a type information storage area 231A, a use amount information storage area 231B, and a use history information storage area 231C. These functions will be described later.

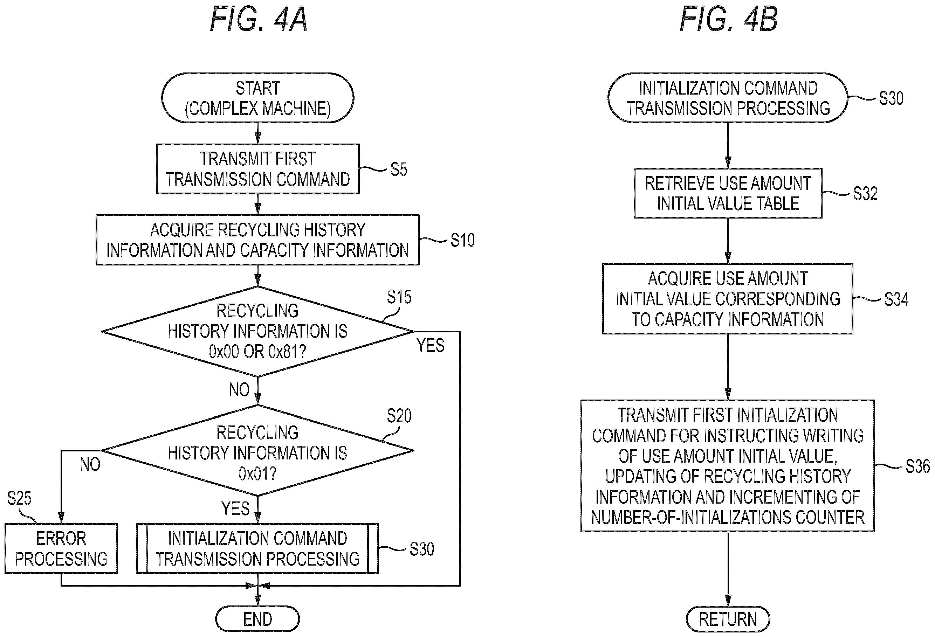

A variety of programs are stored in the program storage area 232, and the various programs include an operation program for the complex machine, including a print processing program relating to execution of an information processing method of the present embodiment based on flowcharts in FIGs. 4A, 4B, 8A, 8B, 10A and 10B, which will be described later. The print processing program is stored in advance in the program storage area 232, as firmware, for example.

### <Other Respective Units>

The display unit 240 is, for example, a liquid crystal monitor and can display various information about consumables. The operation unit 250 is a device configured to receive an operation made by a user. The user can input various instructions to the complex machine 200 by operating the operation unit 250. The communication interface 270 is a wired or wireless network interface for communicating with other apparatuses, and is connected to a network NT.

The scanner unit 280 is configured to optically read a document, which is a reading target, by using a photoelectric conversion element such as a CCD or a CMOS, thereby generating scan data representing a scanned image.

The printing unit 290 is configured to print an image on a sheet being conveyed by a predetermined method while taking out and conveying the sheet in a sheet feeding tray by a conveying mechanism (not shown). In the below, a case where printing is performed by an inkjet method will be described as an example. The printing unit 290 is configured to form an image on the sheet by using ink of the ink cartridge 50 detachably mounted on a cartridge holder 51, according to a print job transmitted from a mobile terminal 300 or a print job generated by itself based on an operation on the operation unit 250. Note that, the entire combination of the ink cartridge 50 mounted on the cartridge holder 51 and the complex machine 200 is an example of the recording apparatus.

Specifically, the printing unit 290 has an inkjet head mounted on a carriage, and printing is performed by the inkjet head ejecting the ink while the carriage moves the inkjet head in a main scanning direction. Note that, specifically, the ink cartridges 50 of respective ink colors of cyan ink, magenta ink, yellow ink and black ink are included. However, for sake of convenience, unless otherwise specified, they are simply referred to as "ink cartridge 50" without distinction.

The mounting detecting sensor 265 is, for example, a connector that conducts with an electrode of the ink cartridge 50 when the ink cartridge 50 is mounted on the cartridge holder 51, for example. The processor 210 can identify whether the ink cartridge 50 is mounted on the cartridge holder 51, based on a detection result of the mounting detecting sensor 265.

The processor 210 is a device configured to perform data processing, and is, for example, a CPU. Note that, the processor 210 is an example of a processor in the main body of the recording apparatus. By executing the print processing program stored in the program storage area 232, the processor 210 is configured to perform various processing shown in FIGs. 4A, 4B, 6, 8A, 8B, 9, 10A, 10B and 11, which will be described later, including data communication to the cartridge 50. The details of the processing contents of the processor 210 will be described later.

The cartridge holder 51 is provided with an opening/closing cover (not shown) that can be opened/closed, and when the ink cartridge 50 is mounted or demounted with respect to the cartridge holder 51, the opening/closing cover is opened, and after the mounting or demounting, the opening/closing cover is closed. The opened state and the closed state of the opening/closing cover are detected by the cover sensor 275 by a known method, and the corresponding detection signals are input to the processor 210.

Note that, the processor 210 may be configured to identify whether the ink cartridge 50 is mounted on the cartridge holder 51, based on the detection result by the cover sensor 275, instead of the mounting detecting sensor 265.

The communication unit 285 is, for example, a terminal or the like, and is electrically connected to the cartridge memory 115 via electrodes 65A to 65C of the ink cartridge 50 mounted on the cartridge holder 51.

### <Ink Cartridge>

As shown in FIG. 1B, the ink cartridge 50 includes a cartridge chip 64, which is a so-called IC chip.

### <Cartridge Chip>

The cartridge chip 64 is a printed circuit board (PCB), and includes a substrate 63, electrodes 65A to 65C, a cartridge memory 115, and a controller 110. Note that, the cartridge memory 115 is an example of the consumable memory.

### <Substrate and Electrodes>

The substrate 63 is a printed wiring board (PWB), and is made of glass epoxy, paper phenol, or the like. The substrate 63 is attached to a surface of the ink cartridge 50.

The electrodes 65A to 65C are formed on the substrate 63. These electrodes 65A to 65C function as an interface for communicating with the communication unit 285 of the complex machine 200.

In a state where the ink cartridge 50 is mounted on the cartridge holder 51, the respective electrodes 65 contact and are electrically connected to respective contact points 142A to 142C of the communication unit 285. Specifically, the electrode 65A contacts and is electrically connected to the contact point 142A, the electrode 65B contacts and is electrically connected to the contact point 142B, and the electrode 65C contacts and is electrically connected to the contact point 142C. Note that, the number of the electrodes 65 is determined according to the number of the contact points 142 of the communication unit 285, and is not limited to three.

### <Cartridge Memory>

The cartridge memory 115 has a volatile storage area 120 and a non-volatile storage area 130 that is an EEPROM of a non-volatile semiconductor memory.

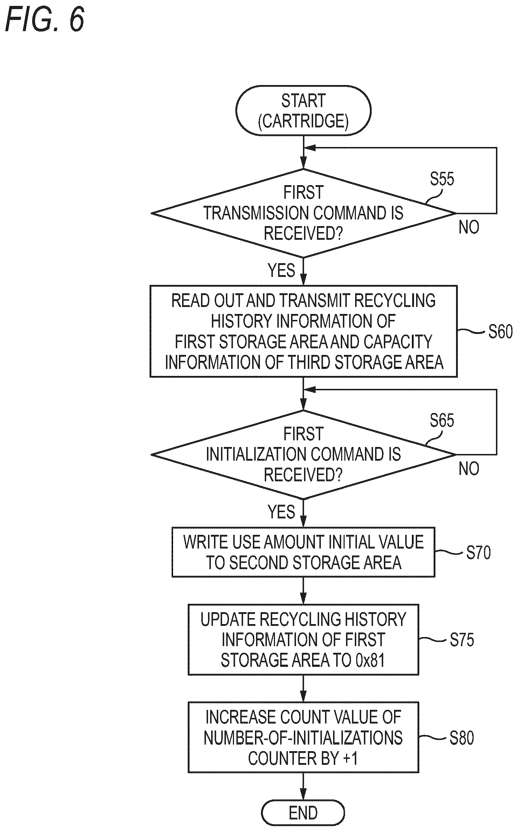

The non-volatile storage area 130 has a first storage area 131, a second storage area 132, a third storage area 133, a program storage area 135, and a number-of-initializations count value storage area 136. A variety of programs are stored in the program storage area 135, and the various programs include a program for the ink cartridge 50, including an information processing program relating to execution of the information processing method of the present embodiment based on flowcharts in FIGs. 6, 9 and 11, which will be described later. The first to third storage areas 131 to 133 and the number-of-initializations count value storage area 136 will be described later. Note that, the non-volatile storage area 130 may also be configured by a non-volatile semiconductor memory other than EEPROM, for example, a magnetic resistance memory.

The volatile storage area 120 may also be a volatile semiconductor memory, for example, an SRAM or a DRAM.

Note that, in the volatile storage area 120 or the non-volatile storage area 130, a latch circuit or a magnetic memory may also be adopted instead of the semiconductor memory.

### <Controller>

The controller 110 has a writing function to a predetermined address of the cartridge memory 115 when a predetermined signal is detected at the electrode 65A.

In addition, the controller 110 has a function of, when the processor 210 of the complex machine 200 reads out information about the ink cartridge 50 stored in the cartridge memory 115 via the electrode 65B and the contact point 142B, transmitting the information about the ink cartridge 50 from the cartridge memory 115 to the electrode 65B.

The controller 110 is configured by an electronic circuit having the above functions, and is configured to perform various processing shown in FIGs. 4A, 4B, 6, 8A, 8B, 9, 10A, 10B and 11, which will be described later, including data communication to the complex machine 200. The electronic circuit is configured by an electronic component mounted on at least one of a front surface or a back surface of the substrate 63 and a patterned wiring formed on at least one of the front surface or the back surface of the substrate 63. The controller 110 is electrically connected to the electrodes 65A, 65B and 65C and the cartridge memory 115.

Note that, the controller 110 is not limited to the electronic circuit, and may be provided with, for example, a CPU capable of performing calculations, thereby realizing the above functions.

### <Information Transmission/Reception Between Complex Machine and Ink Cartridge>

The processor 210 of the complex machine 200 can acquire various information from the cartridge memory 115 of the ink cartridge 50 connected via the communication unit 285 and the electrodes 65A to 65C. Note that, hereinafter, in the present specification, the processing "acquisition" by the processor 210 represents processing of writing information in a non-volatile storage area to a volatile area such as a DRAM, for example. The same applies to the controller 110. Thereby, the processor 210 can identify a type of the ink cartridge 50 mounted on the cartridge holder 51, based on the acquired information. The identification result is associated with a cartridge ID and a model number of the ink cartridge 50 by the processor 210, and is stored at any time in the type information storage area 231A of the consumable-related information storage area 231.

At this time, in the complex machine 200, an ink remaining amount or an ink used amount of the ink cartridge 50 mounted on the cartridge holder 51 is acquired at any time by the processing of the processor 210 by a known method. Then, when the ink remaining amount decreases and reaches a predetermined remaining amount threshold value, or when the ink used amount increases and reaches a predetermined used amount threshold value, it is possible to display on the display unit 240 that the ink cartridge 50 should be replaced. This makes it convenient for the user to replace the ink cartridge 50.

Note that, the ink remaining amount and the ink used amount are collectively referred to as "use amount" as appropriate below, and the information representing the same is referred to as "use amount information". The use amount information acquired as described above can be written to the cartridge memory 115 by processing, which will be described later. In this case, the processor 210 can identify how much the use amount of the ink cartridge 50 is, based on the information acquired via the communication unit 285 while the ink cartridge 50 is mounted on the cartridge holder 51. The identification result, i.e., the use amount information of the ink cartridge 50 is associated with the cartridge ID and the model number by the processor 210, which is then stored at any time in the use amount information storage area 231B of the consumable-related information storage area 231.

Further, when the ink remaining amount or the ink used amount, i.e., the use amount information of the ink cartridge 50 mounted on the cartridge holder 51 is acquired at any time, as described above, the processor 210 stores the history in the use history information storage area 231C, as the use history information.

### <Features of Embodiment>

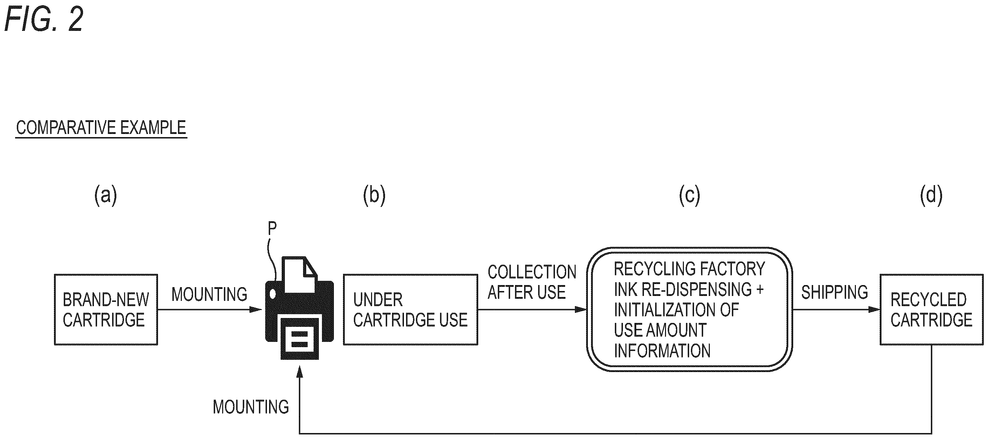

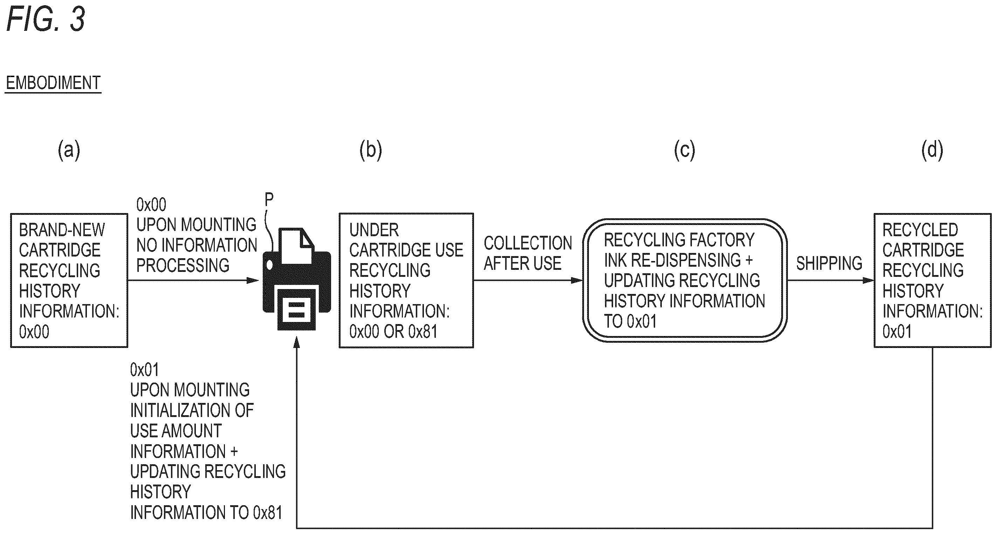

In the above configuration, the feature of the present embodiment is a processing aspect of the information stored in the cartridge memory 115 when performing reusing of the ink cartridge 50. An outline thereof will be described with reference to FIGs. 2 and 3.

### <Outline of Method of Comparative Example>

That is, as described above, when performing reusing of the ink cartridge 50 once used, the recycling processing is usually performed at a dedicated recycling factory. As shown in FIG. 2 as Comparative Example, when a brand-new ink cartridge 50 ((a) in FIG. 2) is used with being mounted on a printing apparatus P including the complex machine 200 or the like ((b) in FIG. 2) and the ink is empty and used up, the ink cartridge is collected and recovered at the recycling factory. At the recycling factory, the ink is re-dispensed into each ink cartridge 50 ((c) in FIG. 2), and the ink cartridge is shipped again as a recycled product that can be used again by the user ((d) in FIG. 2).

On the other hand, when the use amount information of ink is stored in the cartridge memory 115 as described above, the use amount information stored in the cartridge memory 115 is updated as appropriate as the ink cartridge 50 is used and the remaining amount of ink decreases. As a result, in the ink cartridge 50 after use, the remaining amount represented by the use amount information in the cartridge memory 115 is almost zero. When the ink cartridge 50 collected in this state is subjected to recycling at the recycling factory, the ink cartridge 50 is refilled with ink by the re-dispensing. For this reason, it is necessary to initialize the use amount information at the recycling factory, such as returning the use amount information to the content corresponding to the filled state, i.e., for example, a 100% notation representing a full state (refer to (c) in FIG. 2).

In the specification of the present application, "initialization" means "the initial value of the use amount information is written as an amount of ink that can be used again as a recycled product".

In addition, this initialization is not limited to writing the same value of the use amount information as that at the time of the first factory shipment as described above, and it is sufficient when a value of an amount that can be used again as a recycled product is written. For example, a value corresponding to 50% or more and less than 100% of the value at the time of the factory shipment, which is less than a value of the use amount information at the time of the first factory shipment, may be written as the value at the time of initialization.

Further, the value at the time of initialization does not have to completely match an amount of ink actually filled. For example, the ink cartridge 50 may be filled with ink of an amount exceeding the value at the time of initialization.

However, since an amount of the ink required for re-dispensing may differ depending on a type and a size of the ink cartridge and the required communication specification and the like may differ depending on the specification of the cartridge memory 115, a processing burden at the recycling factory may increase. In particular, in order to widely spread the reuse of consumables, it is necessary for as many waste disposal companies as possible to handle the recycling at the recycling factory. However, depending on the scale, capacity and the like of the disposal companies, there is a risk that the increase in the processing burden will be a hamper.

### <Outline of Method of Embodiment>

In the present embodiment, as shown in FIG. 3, the recycling history information is newly stored in the cartridge memory 115. The recycling history information is information representing whether the ink cartridge 50 has been subjected to the recycling in the past. In the shown example, in the brand-new ink cartridge 50, "0x00" representing "no recycling history" is stored in the cartridge memory 115 ((a) in FIG. 3). In this state, the ink cartridge is mounted on the printing apparatus P and used ((b) in FIG. 3), and is collected at a recycling factory after being used as described above. At the remanufacturing factory, unlike Comparative Example shown in FIG. 2, the ink is re-dispensed, but the processing relating to the use amount information is not performed. Instead, at the recycling factory, the recycling history information is updated from the above-described "0x00" to "0x01" representing "there is a recycling history" that recycling has been performed ((c) in FIG. 3), and is then shipped. ((d) in FIG. 3).

Unlike the initialization of the use amount information described above, since the updating of the recycling history information is not affected by the type and size of the ink cartridge 50, the specification of the cartridge memory 115, and the like, and just changes the information from "no recycling history" to "there is a recycling history", the burden on the recycling factory-side can be small.

In the present embodiment, when the recycled and shipped ink cartridge 50 is mounted on the printing apparatus P, the use amount information is initialized in the printing apparatus P ((b) in FIG. 3). At this time, in the printing apparatus P, the use amount information of the ink cartridge 50 is initialized only when the recycling history information is "0x01" of "there is a recycling history" ((d) in FIG. 3 --> (b) in FIG. 3), and in the case of "0x00" of "no recycling history", the use amount information is not updated ((a) in FIG. 3 --> (b) in FIG. 3). Thereby, the use amount information is not initialized when the brand-new ink cartridge 50 is mounted, and the use amount information is initialized only when the ink cartridge 50 recycled at the recycling factory is mounted.

As described above, in the present embodiment, the initialization of the use amount information is performed on the printing apparatus P-side, and the recycling factory updates only the recycling history information, so that it is possible to reduce the processing load on the recycling factory-side.

### <Processing Flow>

In order to realize the above method, the processing performed by the processor 210 of the complex machine 200 and the controller 110 of the ink cartridge 50 of the present embodiment will be described sequentially with reference to FIGs. 4A, 4B and 6.

### <Processing in Complex Machine>

First, the processing performed by the processor 210 of the complex machine 200 will be described with reference to the flowcharts of FIGs. 4A and 4B. Note that, in the following description, the description of each processor is omitted as appropriate, and "in the processor 210 of the complex machine 200", "by the processor 210 of the complex machine 200", and the like may be simply described as "in the complex machine 200", "by the complex machine 200" and the like.

In FIG. 4A, first, in the processor 210 of the complex machine 200, a first transmission command is transmitted to the ink cartridge 50 (step S5). The first transmission command is a command for instructing the controller 110 to read out and transmit the recycling history information and the capacity information from the first storage area 131 and the third storage area 133 of the cartridge memory 115, respectively. The capacity information is information representing the maximum storage capacity of ink in the corresponding ink cartridge 50. In this example, there are three types of sizes of the ink cartridge 50, and as the capacity information corresponding to each size, three types of "standard", "large capacity", and "extra large capacity" from the small capacity to the large capacity are prepared in advance. Information of any of "standard", "large capacity", and "extra large capacity" is stored in the cartridge memory 115 of the ink cartridge 50.

In step S10, in the processor 210, the recycling history information and the capacity information transmitted from the ink cartridge 50 in response to the first transmission command in step S5 are received and acquired. The processing performed by the processor 210 in steps S5 and S10 is an example of the first acquisition processing.

In step S15, in the processor 210, it is determined whether the recycling history information acquired in step S10 is "0x00" representing "no recycling history" or "0x81" representing "use amount initialization completed" (which will be described later in detail). When the recycling history information is "0x00" or "0x81", it is determined Yes to end the flow. That is, in this case, it is determined in step S15 that the initialization of the use amount information in step S30, which will be described later, is not executed. When the recycling history information is neither "0x00" nor "0x81", No is determined and the processing proceeds to step S20.

In step S20, in the processor 210, it is determined whether the recycling history information acquired in step S10 is "0x01" representing "there is a recycling history". When the recycling history information is not "0x01", No is determined, and after predetermined error processing is performed in step S25, this flow ends. When the recycling history information is "0x01", it is determined Yes to proceed to step S30. That is, in this case, it is determined in step S20 that the initialization of the use amount information in step S30, which will be described later, is executed.

In steps S15 and S20, it is determined whether the initialization of the use amount information of step S30 is executed according to the value of the recycling history information acquired in step S10. Therefore, steps S15 and S20 are examples of the determination step, and the processing performed by the processor 210 in steps S15 and S20 is an example of the determination processing.

In step S30, initialization command transmission processing for instructing the initialization of the use amount information is performed. The detailed contents of step S30 are shown in the flowchart of FIG. 4B.

In FIG. 4B, first, in step S32, the use amount initial value table stored in the use amount initial value table storage area 233 of the non-volatile storage device 230 is retrieved by using the capacity information acquired in step S10.

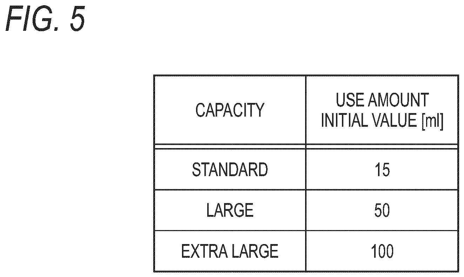

FIG. 5 shows an example of the use amount initial value table. As shown, in this table, the use amount initial value to be set when re-dispensing the ink to the ink cartridge 50 is associated with each content of the capacity information of the ink cartridge 50. In this example, the above-described capacity information "standard" is associated with the use amount initial value 15[ml], the capacity information "large capacity" is associated with the use amount initial value 50[ml], and the capacity information "extra large capacity" is associated with the use amount initial value 100[ml].

In the processor 210, the use amount initial value table shown in FIG. 5 is retrieved and the contents thereof are referred to, so that a use amount initial value in the recycling completion state corresponding to the capacity information acquired in step S10 is acquired (step S34). The processing performed by the processor 210 in steps S32 and S34 is an example of the second acquisition processing.

In step S36, in the processor 210, a first initialization command is transmitted to the ink cartridge 50. The first initialization command is a command for instructing the controller 110 to write the use amount initial value acquired in step S34 to the second storage area 132 to initialize the value of the use amount information, to update the recycling history information in the first storage area 131 from "0x01" to "0x81" and to perform an increment of increasing the number of initializations stored in the number-of-initializations count value storage area 136 by 1. Note that, the number of initializations of the count value storage area 136 is set to 0 in the brand-new ink cartridge 50, for example, at the time of manufacturing. The processing performed by the processor 210 in step S36 is an example of the first initialization command transmission processing.

When step S36 is completed, the processing returns to FIG. 4A and the flow of FIG. 4A ends.

### <Processing in Ink Cartridge>

Processing performed by the controller 110 of the ink cartridge 50 will be described with reference to FIG. 6. As in the above case, in the following description, "in the controller 110 of the ink cartridge 50", "by the controller 110 of the ink cartridge 50", and the like may be simply described as "in the ink cartridge 50", "by the ink cartridge 50", and the like.

In FIG. 6, first, in the controller 110 of the ink cartridge 50, it is determined whether the first transmission command transmitted from the complex machine 200 in step S5 of FIG. 4A is received. When the first transmission command is received, it is determined Yes to proceed to step S60.

In step S60, by the controller 110, the recycling history information is read out from the first storage area 131 of the cartridge memory 115, the capacity information is read out from the third storage area 133, and these information are transmitted to the complex machine 200.

In step S65, in the controller 110, it is determined whether the first initialization command transmitted from the complex machine 200 in step S36 of FIG. 4B is received. When the first initialization command is received, it is determined Yes to proceed to step S70.

In step S70, by the controller 110, as a part of the writing processing, the use amount initial value received and acquired in step S65 is written to the second storage area 132, whereby the value of the use amount information in the second storage area 132 is initialized.

The processing in which the controller 110 executes step S70 is an example of the use amount information writing processing. In addition, the processing performed by the processor 210 in step S36 of FIG. 4B and the processing performed by the controller 110 in step S70 of FIG. 6 are examples of the initialization processing. Further, step S36 in FIG. 4B and step S70 in FIG. 6 are examples of the initialization step.

In step S75, by the controller 110, the recycling history information in the first storage area 131 is updated to "0x81".

As described above, the recycling history information of the brand-new ink cartridge 50 is "0x00". The recycling history information of the ink cartridge 50 recycled at the recycling factory is "0x01". When the ink cartridge 50 after recycling is mounted on the complex machine 200, the recycling history information is set to "0x81" in step S75.

The end "0" of the recycling history information "0x00" of the brand-new ink cartridge 50 and the end "1" of the recycling history information "0x01" and "0x81" of the ink cartridge 50 after recycling represent whether the ink cartridge is a brand-new product without a recycling history or a recycled product with a recycling history. The ends "0" and "1" are examples of the first information part.

The third "0" of the recycling history information "0x01" of the ink cartridge 50 after recycling at the recycling factory, and the third "8" of the recycling history information[0x81] of the ink cartridge 50 mounted on the complex machine 200 after recycling represent whether there is an initialization history of the use amount information when there is a recycling history. The thirds "0" and "8" are examples of the second information part, the ink cartridge 50 after recycling at the recycling factory is an example of an uninitialized recycled product, and the ink cartridge 50 mounted on the complex machine 200 after recycling and subjected to the initialization of the use amount information in step S75 is an example of the initialized recycled product.

In step S80, by the controller 110, the number-of-initializations count value stored in the number-of-initializations count value storage area 136 is increased only by one.

Thereafter, this flow ends.

### <Effects of Embodiment>

As described above, in the present embodiment, the ink use amount information and the recycling history information of the ink cartridge 50 are stored in the cartridge memory 115. Of the stored contents, the use amount information is processed by the initiative of the complex machine 200-side.

By executing step S5 and S10, the processor 210 of the complex machine 200 communicates with the cartridge memory 115 of the ink cartridge 50 mounted on the complex machine 200 via the communication unit 285, and acquires the recycling history information.

Based on the acquired recycling history information, steps S15 and S20 are executed by the processor 210, and it is determined whether or not to perform the initialization processing of initializing the value of the use amount information stored in the cartridge memory 115. When it is determined to perform the initialization processing, the value of the use amount information of the cartridge memory 115 is initialized in steps S36 and S70.

According to the present embodiment, since the complex machine 200 identifies the recycling history of the ink cartridge 50 and the value of the use amount information is accordingly initialized as appropriate, it is not necessary to perform the initialization of the use amount information at the recycling factory, and it is sufficient to perform the simple processing of just updating the recycling history information. According to the present embodiment, it is possible to reduce the processing load at the recycling factory.

In addition, in the present embodiment, in particular, the content of the recycling history information stored in the cartridge memory 115 of the ink cartridge 50 includes the end "0" or "1", which is the first information part, and the end "0" or "8", which is the second information part.

The first information represents whether the ink cartridge 50 is a recycled product with a recycling history or a brand-new product without a recycling history. The second information represents whether the ink cartridge 50 is an initialized recycled product with an initialization history of the use amount information or an uninitialized recycled product without the initialization history when the ink cartridge 50 is a recycled product.

According to the present embodiment, since the recycling history information includes both the information about the presence/absence of the recycling history and the information about the presence/absence of the initialization of the use amount information accompanying the recycling, it is possible to securely reduce the processing load at the recycling factory, as compared to a case where these information are separately divided.

In addition, in the present embodiment, particularly, when the acquired recycling history information represents that the ink cartridge 50 is an initialized recycled product or that the ink cartridge 50 is a brand-new product, the processor 210 determines not to perform the initialization processing.

When the ink cartridge 50 is a brand-new product, the value of the use amount information has been initialized at the manufacturing factory at the time of manufacturing, so that it is not necessary to re-initialize the use amount information in the complex machine 200 on which the ink cartridge 50 is mounted. When the ink cartridge 50 is an initialized recycled product, the value of the use amount information has been initialized at the recycling factory, so that it is not necessary to re-initialize the use amount information in the complex machine 200 on which the ink cartridge 50 is mounted

According to the present embodiment, when the ink cartridge 50 is a brand-new product or an initialized recycled product, it is possible to appropriately handle the ink cartridge without unnecessary processing.

Further, in the present embodiment, in particular, when the acquired recycling history information represents that the ink cartridge 50 is an uninitialized recycled product, the processor 210 determines to perform the initialization processing.

In the present embodiment, when the ink cartridge 50 is an uninitialized recycled product, the use amount information is re-initialized in the complex machine 200, unlike the case where the ink cartridge 50 is a brand-new product or an initialized recycled product.

According to the present embodiment, when the ink cartridge 50 is an uninitialized recycled product, the value of the use amount information is initialized, so that the processing load at the recycling factory can be reduced.

Further, in the present embodiment, in particular, the ink cartridge 50 is provided with the controller 110 configured to control the information reading and writing with respect to the cartridge memory 115, and the updating of the use amount information using the initial value of the use amount information is finally performed by the controller 110 of the ink cartridge 50 (step S36).

In the present embodiment, the initialization command transmission processing is performed by step S36 executed by the processor 210. In the storage device 215, the use amount initial value of each type of the ink cartridge 50 in the recycling completion state is stored. The first initialization command is transmitted to the controller 110 of the cartridge memory 115, so that the initialization processing of initializing the value of the use amount information by writing
the use amount initial value acquired from the storage device 215 to the second storage area 132 of the cartridge memory 115 by the controller 110 is performed (step S70).

According to the present embodiment, since the initialization processing of initializing the value of the use amount information is performed using the use amount initial value stored in the storage device 215, the storage capacity of the cartridge memory 115 can be reduced, as compared to a case where the use amount initial value is stored in the cartridge memory 115.

Further, in the present embodiment, in particular, the capacity information of the ink cartridge 50 is stored in the third storage area 133 of the cartridge memory 115. The processor 210 acquires the capacity information transmitted from the controller 110, based on the first transmission command in steps S5 and S10, accesses the storage device 215, based on the capacity information (step S32), and refers to the use amount initial values of the various ink cartridges 50 stored in advance in the storage device 215 to acquire the corresponding use amount initial value in step S34.

According to the present embodiment, it is possible to perform the initialization processing by referring to the use amount initial values of the various ink cartridges 50 stored in the storage device 215 and acquiring and writing an appropriate use amount initial value to the second storage area 132 of the cartridge memory 115 .Even when the product lineup or capacity information of the ink cartridge 50 changes, it is sufficient to appropriately correct or update the stored content of the storage device 215 on the complex machine 200-side, so that it is possible to smoothly deal with the change.

### <Modified Embodiments>

Note that, the present disclosure is not limited to the above embodiment, and, for example, modified embodiments such as (1), (2) and (3) below are also included in the technical scope. The modified embodiments will be sequentially described below. The parts equivalent to the above embodiment are denoted with the same reference signs, and the descriptions thereof are appropriately omitted or simplified.
(1) In a case where the cartridge memory stores the use amount information

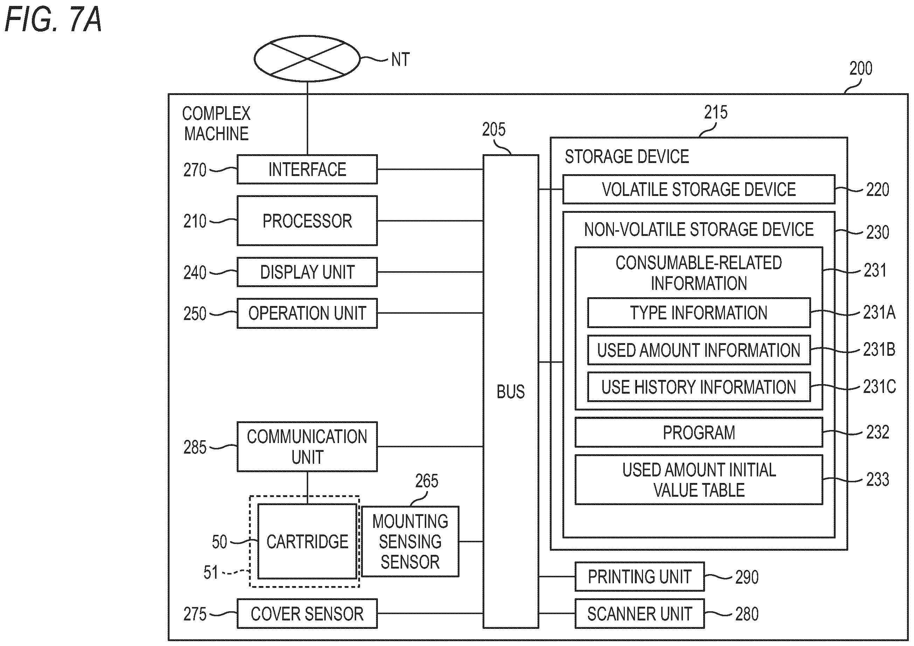

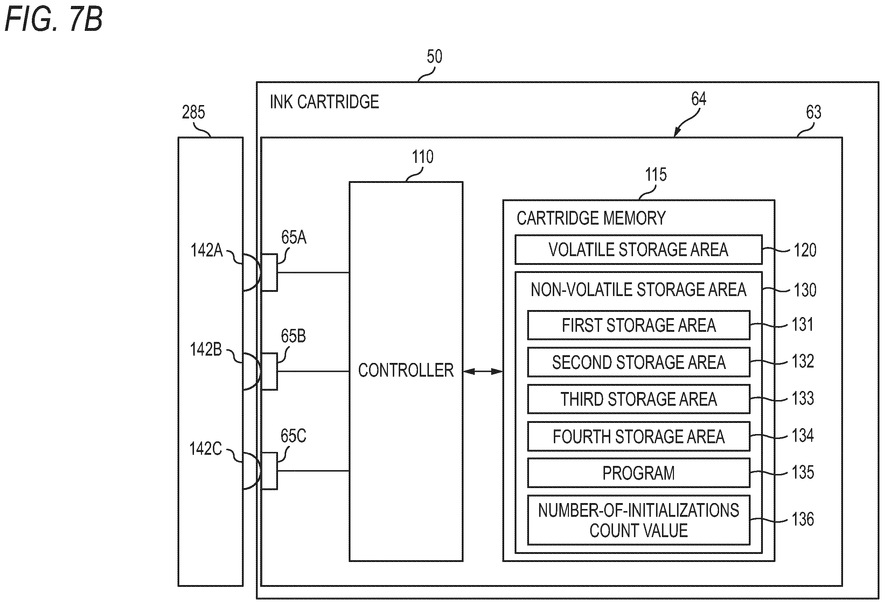

FIGs. 7A and 7B are functional block diagrams corresponding to FIGs. 1A and 1B of the above embodiment, showing the configurations of the complex machine 200 and the ink cartridge 50 in the present modified embodiment.

The configuration shown in FIG. 7A is the same as that in FIG. 1A. In FIG. 7B, the non-volatile storage area 130 of the ink cartridge 50 is newly provided with a fourth storage area 134. In the present modified embodiment, the use amount initial value to be set at the time of recycling completion of the ink cartridge 50 is stored in advance in the fourth storage area 134. When acquiring the recycling history information from the cartridge 50, the processor 210 of the complex machine 200 also acquires the use amount initial value described above. The processor 210 transmits a second initialization command to the controller 110 of the ink cartridge 50, thereby causing the controller 110 to write the acquired use amount initial value to the second storage area 132.

The processing performed by the processor 210 of the complex machine 200 and the controller 110 of the ink cartridge 50 of the present embodiment so as to implement the above method of the present modified embodiment will be described with reference to FIGs. 4A, 4B and 6.

### <Processing in Complex Machine>

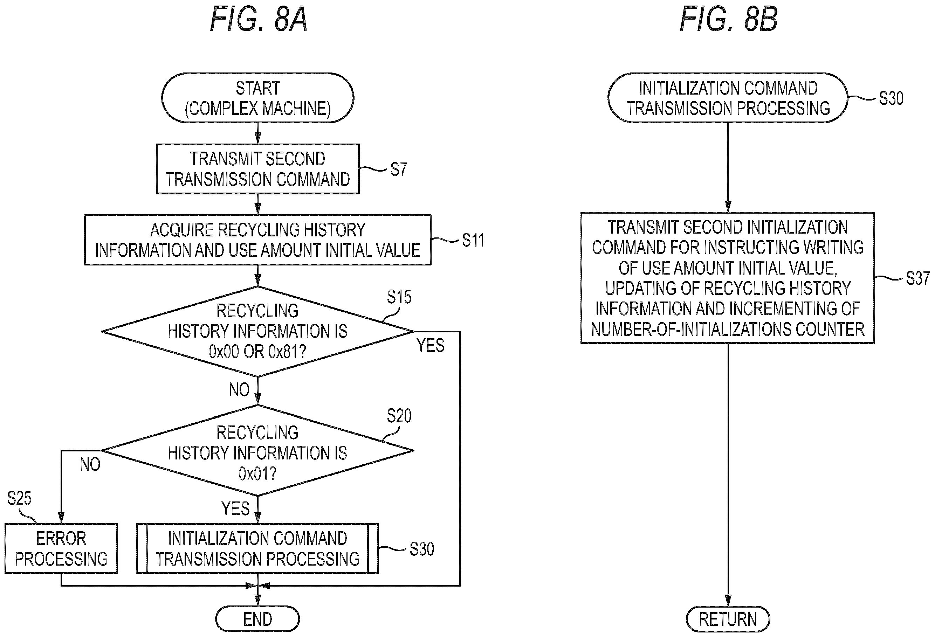

First, the processing performed by the processor 210 of the complex machine 200 will be described with reference to a flowchart of FIG. 8A corresponding to FIG. 4A.

In FIG. 8A, steps S7 and S11 are newly provided, in place of steps S5 and S10 in FIG. 4A.

First, in step S7, in the processor 210, a second transmission command is transmitted to the ink cartridge 50. The second transmission command is a command for instructing the controller 110 to read out and transmit the recycling history information and the use amount initial value from the first storage area 131 and the fourth storage area 134 of the cartridge memory 115. In the fourth storage area 134, specific numerical information such as 15[ml], 50[ml], 100[ml] and the like is stored in conformity to the size of the ink cartridge 50, the maximum storage capacity of the ink, and the like.

In step S11, in the processor 210, the recycling history information and the use amount initial value transmitted from the ink cartridge 50 in response to the second transmission command in step S7 are received and acquired. The processing performed by the processor 210 in steps S7 and S11 is an example of the first acquisition processing of the present modified embodiment. Thereafter, in steps S15 to S30, the equivalent processing to that of the above embodiment is performed.

The detailed contents of the initialization command transmission processing performed in step S30 in the present modified embodiment are shown in a flow of FIG. 8B corresponding to FIG. 4B.

In FIG. 8B, steps S32 and S34 of FIG. 4B are deleted, and step S37 is newly provided in place of step S36.

In step S37, in the processor 210, a second initialization command is transmitted to the ink cartridge 50. The first initialization command is a command for instructing the controller 110 to write the use amount initial value acquired in step S11 to the second storage area 132 to initialize the value of the use amount information, to update the recycling history information in the first storage area 131 from "0x01" to "0x81" and to perform an increment of increasing the number of initializations stored in the number-of-initializations count value storage area 136 by 2. Step S37 is an example of the initialization step, and the processing performed by the processor 210 in step S37 is an example of the second initialization command transmission processing.

When step S37 is completed, the processing returns to FIG. 8A and the flow of FIG. 8A ends.

### <Processing in Ink Cartridge>

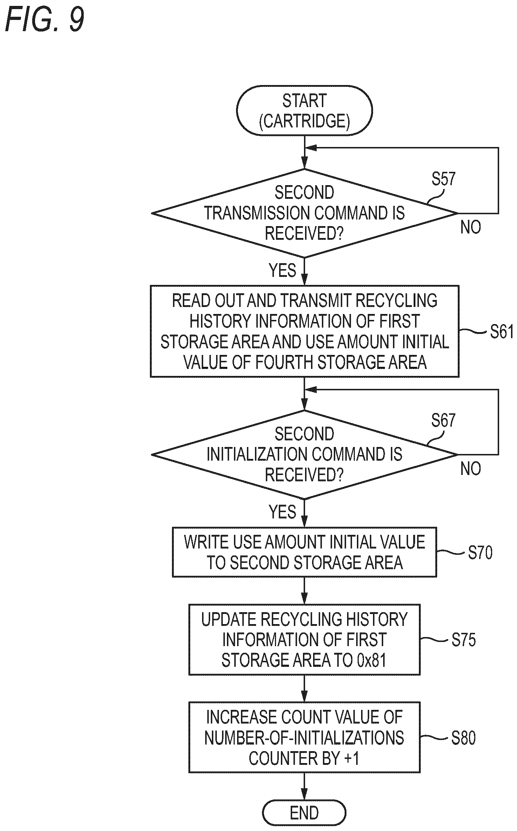

The processing performed by the controller 110 of the ink cartridge machine 50 will be described with reference to a flowchart of FIG. 9 corresponding to FIG. 6 in the above embodiment.

In FIG. 9, steps S57, S61 and S67 are newly provided, in place of steps S55, S60 and S65 in FIG. 6.

First, in step S57, in the controller 110 of the ink cartridge 50, it is determined whether the second transmission command transmitted from the complex machine 200 in step S7 of FIG. 8A is received. When the second transmission command is received, it is determined Yes to proceed to step S61.

In step S61, by the controller 110, the recycling history information is read out from the first storage area 131 of the cartridge memory 115, the use amount initial value is read out from the fourth storage area 134, and these information are transmitted to the complex machine 200.

In step S67, in the controller 110, it is determined whether the second initialization command transmitted from the complex machine 200 in step S37 of FIG. 8B is received. When the second initialization command is received, it is determined Yes to proceed to step S70.

In step S70, the similar processing to FIG. 6 is performed, and by the controller 110, the use amount initial value received and acquired in step S67 is written to the second storage area 132, whereby the value of the use amount information in the second storage area 132 is initialized.

In the present modified embodiment, the processing in which the controller 110 executes step S70 is an example of the use amount information writing processing. In addition, in the present modified embodiment, the processing performed by the processor 210 in step S37 of FIG. 8B and the processing performed by the controller 110 in step S70 of FIG. 9 are examples of the initialization processing. Further, step S37 in FIG. 8B and step S70 in FIG. 9 are examples of the initialization step. The processing contents of steps S75 and S80 are similar to those in FIG. 6, and the descriptions thereof are omitted. After step S80, this flow ends.

### <Effects of Modified Embodiment>

In the present modified embodiment, the similar effects to the above embodiment are obtained.

In the present modified embodiment, by executing steps S7 and S11, the processor 210 of the complex machine 200 communicates with the cartridge memory 115 of the ink cartridge 50 mounted on the complex machine 200 via the communication unit 285, and acquires the recycling history information.

Based on the acquired recycling history information, steps S15 and S20 are executed by the processor 210, and it is determined whether or not to execute step S37 of initializing the value of the use amount information stored in the cartridge memory 115. When it is determined to execute step S37 based on the recycling history information, the value of the use amount information of the cartridge memory 115 is initialized by the processor 210 in step S37.

According to the present modified embodiment, as in the above embodiment, it is not necessary to perform the initialization of the use amount information at the recycling factory, and it is sufficient to perform the simple processing of just updating the recycling history information, so that it is possible to reduce the processing load at the recycling factory.

In addition, in the present modified embodiment, the initialization command transmission processing is performed in step S37 executed by the processor 210.

In the fourth storage area 134 of the cartridge memory 115, the use amount initial value of the ink cartridge 50 ina the recycling completion state is stored. The processor 210 transmits the second transmission command to the controller 110 in steps S7 and S11, and acquires the use amount initial value read out and transmitted from the fourth storage area 134 by the controller 110 based on the second transmission command (step S11). In step S37, the second initialization command is transmitted from the processor 210 to the controller 110, so that the initialization processing of initializing the value of the use amount information by writing the acquired use amount initial value to the second storage area 132 of the cartridge memory 115 by the controller 110 is performed (step S70).

According to the present embodiment, since the initialization processing of the value of the use amount information is performed using the use amount initial value stored in advance in the fourth storage area 134 of the cartridge memory 115, the processing on the complex machine 200-side can be simplified.

(2) In a case of transmitting a command to copy data from the complex machine to the cartridge

### <Processing in Complex Machine>

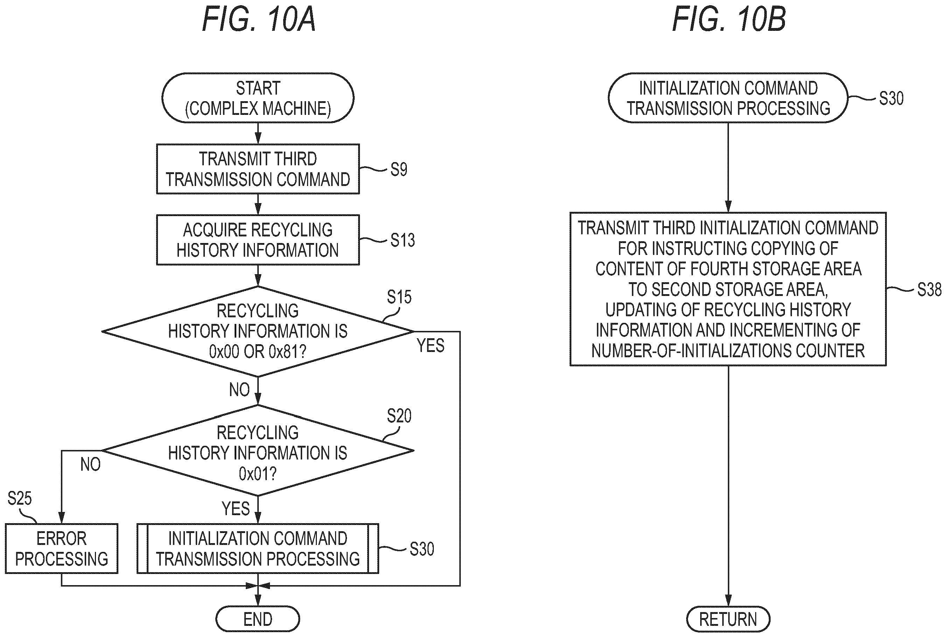

The processing performed by the processor 210 of the complex machine 200 so as to implement the above method of the present modified embodiment will be described with reference to a flowchart of FIG. 10A corresponding to FIG. 8A of the modified embodiment of the above (1).

In FIG. 10A, steps S9 and S13 are newly provided, in place of steps S7 and S11 in FIG. 8A.

First, in step S9, in the processor 210, a third transmission command is transmitted to the ink cartridge 50. The third transmission command is a command for instructing the controller 110 to read out and transmit the recycling history information from the first storage area 134 of the cartridge memory 115.

In step S13, in the processor 210, the recycling history information transmitted from the ink cartridge 50 in response to the third transmission command in step S9 is received and acquired. The processing performed by the processor 210 in steps S9 and S13 is an example of the first acquisition processing of the present modified embodiment. Thereafter, in steps S15 to S30, the equivalent processing to that of the above embodiment and the modified embodiment of the above (1) is performed.

The detailed contents of the initialization command transmission processing performed in step S30 in the present modified embodiment are shown in a flow of FIG. 10B corresponding to FIG. 8B.

In FIG. 10B, step S38 is newly provided, in place of step S37 in FIG. 8B.

In step S38, in the processor 210, a third initialization command is transmitted to the ink cartridge 50. The third initialization command is a command for instructing the controller 110 to copy the stored content of the fourth storage area 134 to the second storage area 132 to initialize the value of the use amount information, to update the recycling history information in the first storage area 131 from "0x01" to "0x81" and to perform an increment of increasing the number of initializations stored in the number-of-initializations count value storage area 136 by 1. Step S38 is an example of the initialization step, and the processing performed by the processor 210 in step S38 is an example of the third initialization command transmission processing.

When step S38 is completed, the processing returns to FIG. 10A and the flow of FIG. 10A ends.

### <Processing in Ink Cartridge>

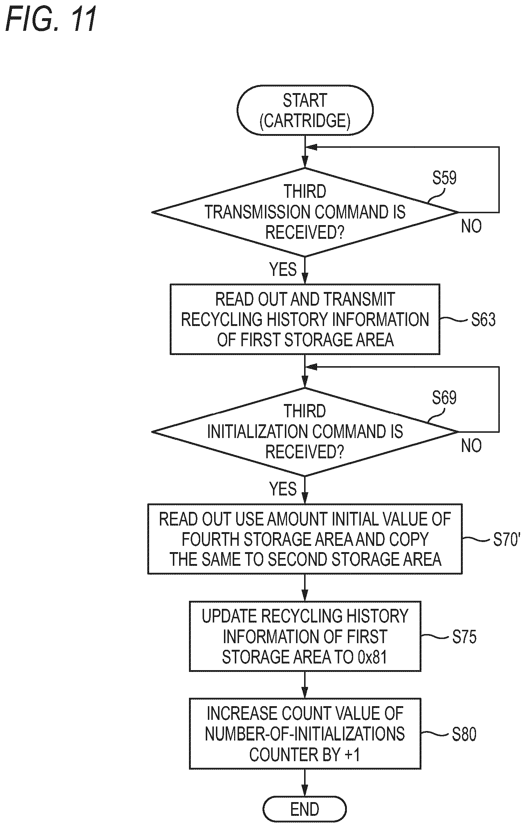

The processing performed by the controller 110 of the ink cartridge machine 50 will be described with reference to a flowchart of FIG. 11 corresponding to FIG. 9 of the modified embodiment of the above (1).

In FIG. 11, steps S59, S63 and S69 are newly provided, in place of steps S57, S61 and S67 in FIG. 9. In addition, instead of step S70 in FIG. 9, step S70' conforming to step S70 is provided.

First, in step S59, in the controller 110 of the ink cartridge 50, it is determined whether the third transmission command transmitted from the complex machine 200 in step S9 of FIG. 10A is received. When the third transmission command is received, it is determined Yes to proceed to step S63.

In step S63, by the controller 110, the recycling history information is read out from the first storage area 131 of the cartridge memory 115 and is transmitted to the complex machine 200.

In step S69, in the controller 110, it is determined whether the third initialization command transmitted from the complex machine 200 in step S38 of FIG. 10B is received. When the third initialization command is received, it is determined Yes to proceed to step S70'.

In step S70', by the controller 110, the use amount initial value stored in the fourth storage area 134 is read out, and as a part of the writing processing, the value is copied to the second storage area 132, so that the value of the use amount information in the second storage area 132 is initialized.

In the present modified embodiment, the processing in which the controller 110 executes step S70' is an example of the use amount information writing processing. In addition, in the present modified embodiment, the processing performed by the processor 210 in step S38 of FIG. 10B and the processing performed by the controller 110 in step S70' of FIG. 11 are examples of the initialization processing. Further, step S38 in FIG. 10B and step S70' in FIG. 11 are examples of the initialization step.

The processing contents of steps S75 and S80 are similar to those in FIGs. 6 and 9, and the descriptions thereof are omitted. After step S80, this flow ends.

### <Effects of Modified Embodiment>

In the present modified embodiment, the similar effects to the above embodiment are obtained.

In the present modified embodiment, by executing steps S9 and S13, the processor 210 of the complex machine 200 communicates with the cartridge memory 115 of the ink cartridge 50 mounted on the complex machine 200 via the communication unit 285, and acquires the recycling history information.

Based on the acquired recycling history information, steps S15 and S20 are executed by the processor 210, and it is determined whether or not to execute step S38 of initializing the value of the use amount information stored in the cartridge memory 115. When it is determined to execute step S38 based on the recycling history information, the value of the use amount information of the cartridge memory 115 is initialized by the processor 210 in step S38.

According to the present modified embodiment, as in the above embodiment, it is not necessary to perform the initialization of the use amount information at the recycling factory, and it is sufficient to perform the simple processing of just updating the recycling history information, so that it is possible to reduce the processing load at the recycling factory.

In addition, in the present modified embodiment, particularly, the processor 210 transmits the third transmission command to the controller 110 of the cartridge memory 115 by steps S9 and S13, thereby acquiring the recycling history information read out and transmitted from the first storage area 131 by the controller 110 based on the third transmission command (step S13). When the recycling history information is acquired, the processor 210 executes step S38 to transmit the third initialization command to the controller 110, so that the initialization processing of initializing the value of the use amount information by reading out the use amount initial value stored in the fourth storage area 134 and copying and writing the same to the second storage area 132 by the controller 110 is performed (step S70').

According to the present embodiment, the value of the use amount information is initialized by simply copying the use amount initial value stored in advance in the cartridge memory 115, so that the processing on the complex machine 200-side can be further simplified.

### (3) Others

Note that, in the above embodiment and the respective modified embodiments, the command is transmitted from the processor 210 of the complex machine 200 to the controller 110 of the ink cartridge 50, so that the controller 110 reads out and writes information with respect to the cartridge memory 115. However, the present disclosure is not limited thereto. That is, the processor 210 of the complex machine 200 may be configured to read out and write information with respect to the cartridge memory 115 via the communication unit 285 and the electrodes 65A to 65C without going through the controller 110.

In this case, steps S5, S7 and S9 described above are omitted, and in subsequent steps S10, S11 and S13, each information is directly acquired from the cartridge memory 115 by the processor 210. Further, in steps S36, S37 and S38, the processor 210 directly writes the use amount initial value to the second storage area 132, instead of outputting the first to third initialization commands to the controller 110 and causing the controller 110 to write the use amount initial value to the second storage area 132. The same applies to the updating of the recycling history information and the incrementing of the number-of-initializations count value. That is, in these cases, the initialization processing of initializing the value of the use amount information in the second storage area 132 is performed by the processor 210.

Further, in the above case, the controller 110 may be omitted in the ink cartridge 50, and the processor 210 may directly read out and write information with respect to the cartridge memory 115 via the electrodes 65A to 65C.

Further, in the above, the ink has been taken as an example of the consumable material, and the ink remaining amount or the ink used amount of the ink cartridge 50 has been described as an example of the use amount information. However, the present disclosure is not limited thereto. For example, when a laser type complex machine 200 is used instead of an inkjet type, toner may be used as a consumable material and a remaining amount or use amount of toner in a toner cartridge may be treated as the use amount information, or a drum may be used as a consumable and a remaining life thereof may be treated as the use amount information.

## Claims

1. A consumable (50) for a recording apparatus, the consumable configured to be detachably attached to a main body (200) of the recording apparatus and comprising a consumable memory (115) configured to communicate with the recording apparatus and a controller (110) configured to control reading and writing of information with respect to the consumable memory (115),
wherein the consumable memory (115) has:
a first storage area (131) in which recycling history information of the consumable (50) is stored, the recycling history information including a first information part representing whether the consumable (50) is a recycled product with a recycling history or a brand-new product without the recycling history, and a second information part representing whether the consumable (50) is an initialized recycled product with an initialization history of use amount information of a consumable material included in the consumable (50) or an uninitialized recycled product without the initialization history, in a case where the consumable (50) is the recycled product, wherein the amount of remaining consumable material or remaining life time or the amount of used consumable material or time used is referred to as "use amount" and the information representing the "use amount" is referred to as "use amount information" and wherein "initialization" means that an initial value of the use amount information is written as an amount of consumable material or lifetime that can be used again as a recycled product;
a second storage area (132) in which the use amount information is stored; and
any one storage area of a third storage area (133) in which capacity information of the consumable (50) is stored and a fourth storage area (233) in which a use amount initial value of the consumable (50) in a recycling completion state is stored, and
wherein the controller (110) is configured to perform use amount information writing processing of writing a predetermined use amount initial value to the second storage area (132), in response to receiving a command transmitted from the recording apparatus.

2. The consumable (50) for the recording apparatus according to claim 1,
wherein in response to receiving a first transmission command transmitted from the recording apparatus, the controller (110) is configured to read out the recycling history information and the capacity information from the first storage area (131) and the third storage area (133), to transmit the read recycling history information and the read capacity information to the recording apparatus, and
wherein in response to receiving a first initialization command as the command, the controller (110) is configured to write the use amount initial value included in the first information command and corresponding to the capacity information to the second storage area (132), to initialize a value of the use amount information.

3. The consumable (50) for the recording apparatus according to claim 1,
wherein in response to receiving a second transmission command transmitted from the recording apparatus, the controller (110) is configured to read out the recycling history information and the use amount initial value from the first storage area (131) and the fourth storage area (233), to transmit the read recycling history information and the read use amount initial value to the recording apparatus, and
wherein in response to receiving a second initialization command as the command, the controller (110) is configured to write the use amount initial value included in the second initialization command to the second storage area (132), to initialize a value of the use amount information.

4. The consumable for the recording apparatus according to claim 1,
wherein in response to receiving a third transmission command transmitted from the recording apparatus, the controller (110) is configured to read out the recycling history information from the first storage area (131), to transmit the read recycling history information to the recording apparatus, and
wherein in response to receiving a third initialization command as the command, the controller (110) is configured to read out the use amount initial value stored in the fourth storage area (233) and write the read use amount initial value to the second storage area (132), to initialize a value of the use amount information.

5. A recording apparatus comprising:
a main body (200) of the recording apparatus; and
the consumable (50) according to any of claims 1 to 4,
wherein the main body (200) of the recording apparatus has a communication unit (285) configured to communicate with the consumable memory (115), and a processor (210), and
wherein the processor (210) is configured to perform:
first acquisition processing of acquiring the recycling history information from the consumable memory (115) of the consumable (50) mounted on the main body (200) of the recording apparatus by communication via the communication unit (285); and
determination processing of determining whether or not to perform initialization processing of initializing a value of the use amount information stored in the consumable memory (115), according to the acquired recycling history information.

6. The recording apparatus according to claim 5, wherein the recycling history information includes:
a first information part representing whether the consumable (50) is a recycled product with a recycling history or a brand-new product without the recycling history; and
a second information part representing whether the consumable (50) is an initialized recycled product with an initialization history of the use amount information or an uninitialized recycled product without the initialization history, in a case where the consumable (50) is the recycled product.

7. The recording apparatus according to claim 6, wherein the processor (210) is configured to determine not to perform the initialization processing in the determination processing, in a case where the acquired recycling history information represents that the consumable (50) is the initialized recycled product or that the consumable (50) is the brand-new product.

8. The recording apparatus according to claim 7, wherein the processor is configured to determine to perform the initialization processing in the determination processing, in a case where the acquired recycling history information represents that the consumable (50) is the uninitialized recycled product.

9. The recording apparatus according to claim 8,
wherein the main body (200) of the recording apparatus further has a main body memory (215) that stores a use amount initial value of each of a plurality of types of the consumables in a recycling completion state, and
wherein the processor (210) is further configured to perform first initialization command transmission processing of transmitting, to the controller (110) via the communication unit (285), a first initialization command for writing the use amount initial value acquired from the main body memory (215) to the second storage area (132) of the consumable memory (115) to initialize the value of the use amount information.

10. The recording apparatus according to claim 9,
wherein the processor (210) is further configured to:
transmit, to the controller (110) via the communication unit (285), a first transmission command for reading out and transmitting the recycling history information and the capacity information from the first storage area (131) and the third storage (133) area of the consumable memory (115), to acquire the recycling history information and the capacity information transmitted from the controller (110) in response to the first transmission command, in the first acquisition processing;
perform second acquisition processing of acquiring, from the main body memory (215), the use amount initial value corresponding to the capacity information acquired from the controller (110) of the consumable memory (115); and
transmit, to the controller (110) via the communication unit (285), the use amount initial value acquired from the main body memory (215) in the second acquisition processing, in the first initialization command transmission processing.

11. The recording apparatus according to claim 8,
wherein the processor (210) is further configured to:
transmit, to the controller (110) via the communication unit (285), a second transmission command for reading out and transmitting the recycling history information and the use amount initial value from the first storage area (131) and the fourth storage area (233) of the consumable memory (115), to acquire the recycling history information and the use amount initial value transmitted from the controller (110) in response to the second transmission command, in the first acquisition processing; and
perform second initialization command transmission processing of transmitting, to the controller (110) via the communication unit (285), a second initialization command for writing the acquired use amount initial value to the second storage area (132) of the consumable memory (115) to initialize the value of the use amount information.

12. The recording apparatus according to claim 8,
wherein the processor (210) is further configured to:
transmit, to the controller (210) via the communication unit (285), a third transmission command for reading out and transmitting the recycling history information from the first storage area (131) of the consumable memory (115), to acquire the recycling history information transmitted from the controller (110) in response to the third transmission command, in the first acquisition processing; and
perform third initialization command transmission processing of transmitting, to the controller (110) via the communication unit (285), a third initialization command for reading out the use amount initial value stored in the fourth storage area (233) of the consumable memory (115) and writing the read use amount initial value to the second storage area (132) of the consumable memory (115) to initialize the value of the use amount information, in a case of acquiring the recycling history information.

13. An information processing method of performing predetermined processing on use amount information of a consumable material included in a consumable (50) according to any of claims 1 to 4 and recycling history information of the consumable (50), the use amount information and the recycling history information being stored in a consumable memory (115) provided to the consumable (50) configured to be detachably attached to a main body of a recording apparatus, the information processing method comprising the steps of:
acquiring the recycling history information from the consumable memory (115) by communication (S10); and
determining whether or not to perform initialization processing of initializing a value of the use amount information stored in the consumable memory (115), according to the acquired recycling history information (S15, S20).

14. The information processing method according to claim 13,
wherein the recycling history information includes:
a first information part representing whether the consumable (50) is a recycled product with a recycling history or a brand-new product without the recycling history; and
a second information part representing whether the consumable (50) is an initialized recycled product with an initialization history of the use amount information or an uninitialized recycled product without the initialization history, in a case where the consumable (50) is the recycled product, and
wherein it is determined not to perform the initialization processing in the determination step, in a case where the acquired recycling history information represents that the consumable (50) is the initialized recycled product or that the consumable (50) is the brand-new product.

15. The information processing method according to claim 14, wherein it is determined to perform the initialization processing (S30) in the determination step (S15, S20), in a case where the acquired recycling history information represents that the consumable (50) is the uninitialized recycled product (S20).

## Patentansprüche

1. Verbrauchsmaterial (50) für ein Aufzeichnungsgerät, wobei das Verbrauchsmaterial so konzipiert ist, dass es abnehmbar an einem Hauptkörper (200) des Aufzeichnungsgeräts angebracht werden kann und einen Verbrauchsmaterial-Speicher (115) umfasst, der so konzipiert ist, dass er mit dem Aufzeichnungsgerät kommuniziert, sowie einen Controller (110), der so konzipiert ist, dass er das Lesen und Schreiben von Informationen in Bezug auf den Verbrauchsmaterial-Speicher (115) steuert,
wobei der Verbrauchsmaterial-Speicher (115) folgendes umfasst:
einen ersten Speicherbereich (131), in dem Recyclingshistorie-Information des Verbrauchsmaterials (50) gespeichert ist, wobei die Recyclingshistorie-Information einen ersten Informationsteil umfasst, der angibt, ob das Verbrauchsmaterial (50) ein recyceltes Produkt mit einer Recyclingshistorie oder ein brandneues Produkt ohne Recyclingshistorie ist, und einen zweiten Informationsteil, der angibt, ob das Verbrauchsmaterial (50) ein initialisiertes recyceltes Produkt mit einer Initialisierungshistorie von Nutzungsmenge-Information eines Verbrauchsmaterials, das im Verbrauchsmaterial (50) enthalten ist, oder ein nicht initialisiertes recyceltes Produkt ohne Initialisierungshistorie ist, in einem Fall, in dem das Verbrauchsmaterial (50) das recycelte Produkt ist, wobei die Menge des verbleibenden Verbrauchsmaterials oder der verbleibenden Lebensdauer oder die Menge des verwendeten Verbrauchsmaterials oder der verwendeten Zeit als "Nutzungsmenge" bezeichnet wird und die Information, die die "Nutzungsmenge" angibt, als "Nutzungsmenge-Information" bezeichnet wird und wobei "Initialisierung" bedeutet, dass ein Anfangswert der Nutzungsmenge-Information als Menge des Verbrauchsmaterials oder der Lebensdauer, die als recyceltes Produkt erneut verwendet werden kann, geschrieben wird;
einen zweiten Speicherbereich (132), in dem die Nutzungsmenge-Information gespeichert ist; und
einen beliebigen Speicherbereich von einem dritten Speicherbereich (133), in dem Kapazitäts-Information des Verbrauchsmaterials (50) gespeichert ist und einem vierten Speicherbereichs (233), in dem ein Anfangswert der Nutzungsmenge des Verbrauchsmaterials (50) in einem Recyclingabschlusszustand gespeichert ist, und
wobei der Controller (110) so konzipiert ist, dass er eine Nutzungsmenge-Informations-Schreibverarbeitung durchführt, bei der ein vorgegebener Anfangswert der Nutzungsmenge in den zweiten Speicherbereich (132) geschrieben wird, als Reaktion auf den Empfang eines Befehls, der von dem Aufzeichnungsgerät übertragen wird.

2. Verbrauchsmaterial (50) für das Aufzeichnungsgerät nach Anspruch 1,
wobei der Controller (110) als Reaktion auf den Empfang eines ersten Übertragungsbefehls, der vom Aufzeichnungsgerät übertragen wird, so konzipiert ist, dass er die Recyclingshistorie-Information und die Kapazitäts-Information aus dem ersten Speicherbereich (131) und dem dritten Speicherbereich (133) ausliest, um die ausgelesene Recyclingshistorie-Information und Kapazitäts-Information an das Aufzeichnungsgerät zu übertragem, und
wobei der Controller (110) als Reaktion auf den Empfang eines ersten Initialisierungsbefehls als den Befehl so konzipiert ist, dass er den in dem ersten Informationsbefehl enthaltenen Anfangswert der Nutzungsmenge, der der Kapazitätsinformation entspricht, in den zweiten Speicherbereich (132) schreibt, um einen Wert der Nutzungsmenge-Information zu initialisieren.

3. Verbrauchsmaterial (50) für das Aufzeichnungsgerät nach Anspruch 1,
wobei der Controller (110) als Reaktion auf den Empfang eines zweiten Übertragungsbefehls, der vom Aufzeichnungsgerät übertragen wird, so konzipiert ist, dass er die Recyclingshistorie-Information und den Anfangswert der Nutzungsmenge aus dem ersten Speicherbereich (131) und dem vierten Speicherbereich (233) ausliest, um die ausgelesene Recyclingshistorie-Information und den ausgelesenen Anfangswert der Nutzungsmenge an das Aufzeichnungsgerät zu übertragen, und
wobei der Controller (110) als Reaktion auf den Empfang eines zweiten Initialisierungsbefehls als den Befehl so konzipiert ist, dass er den Anfangswert der Nutzungsmenge, der im zweiten Initialisierungsbefehl enthalten ist, in den zweiten Speicherbereich (132) schreibt, um einen Wert der Nutzungsmenge-Information zu initialisieren.

4. Verbrauchsmaterial für das Aufzeichnungsgerät nach Anspruch 1,
wobei der Controller (110) als Reaktion auf den Empfang eines dritten Übertragungsbefehls, der vom Aufzeichnungsgerät übertragen wird, so konzipiert ist, dass er die Recyclingshistorie-Information aus dem ersten Speicherbereich (131) ausliest, um die ausgelesene Recyclingshistorie-Information an das Aufzeichnungsgerät zu übertragen, und
wobei der Controller (110) als Reaktion auf den Empfang eines dritten Initialisierungsbefehls als den Befehl so konzipiert ist, dass er den im vierten Speicherbereich (233) gespeicherten Anfangswert der Nutzungsmenge ausliest und den ausgelesenen Anfangswert der Nutzungsmenge in den zweiten Speicherbereich (132) schreibt, um einen Wert der Nutzungsmenge-Information zu initialisieren.

5. Aufzeichnungsgerät, das umfasst:
einen Hauptkörper (200) des Aufzeichnungsgeräts; und
das Verbrauchsmaterial (50) gemäß einem der Ansprüche 1 bis 4,
wobei der Hauptkörper (200) des Aufzeichnungsgeräts eine Kommunikationseinheit (285) umfasst, die so konzipiert ist, dass sie mit dem Verbrauchsmaterial-Speicher (115) kommuniziert, sowie einen Prozessor (210), und
wobei der Prozessor (210) so konzipiert ist, dass er Folgendes ausführt:
eine erste Erwerbsverarbeitung, um die Recyclingshistorie-Information aus dem Verbrauchsmaterial-Speicher (115) des Verbrauchsmaterials (50), das auf dem Hauptkörper (200) des Aufzeichnungsgeräts montiert ist, über die Kommunikationseinheit (285) zu erwerben; und
eine Bestimmungsverarbeitung, um zu bestimmen, ob eine Initialisierungsverarbeitung zur Initialisierung eines Wertes der Nutzungsmenge-Information, die im Verbrauchsmaterial-Speicher (115) gespeichert ist, gemäß der erworbenen Recyclingshistorie-Information durchgeführt werden soll.

6. Aufzeichnungsgerät gemäß Anspruch 5, wobei die Recyclingshistorie-Information Folgendes umfasst:
einen ersten Informationsteil, der angibt, ob das Verbrauchsmaterial (50) ein recyceltes Produkt mit einer Recyclingshistorie oder ein brandneues Produkt ohne Recyclingshistorie ist; und
einen zweiten Informationsteil, der angibt, ob das Verbrauchsmaterial (50) ein initialisiertes recyceltes Produkt mit einer Initialisierungshistorie der Nutzungsmenge-Information oder ein nicht initialisiertes recyceltes Produkt ohne Initialisierungshistorie ist, in einem Fall, in dem das Verbrauchsmaterial (50) das recycelte Produkt ist.

7. Aufzeichnungsgerät gemäß Anspruch 6, wobei der Prozessor (210) so konzipiert ist, dass er in der Bestimmungsverarbeitung bestimmt, dass die Initialisierungsverarbeitung nicht durchgeführt werden soll, in einem Fall, in dem die erworbene Recyclingshistorie-Information angibt, dass das Verbrauchsmaterial (50) das initialisierte recycelte Produkt oder das brandneue Produkt ist.

8. Aufzeichnungsgerät gemäß Anspruch 7, wobei der Prozessor so konzipiert ist, dass er in der Bestimmungsverarbeitung bestimmt, dass die Initialisierungsverarbeitung durchgeführt werden soll, in einem Fall, in dem die erworbene Recyclingshistorie-Information angibt, dass das Verbrauchsmaterial (50) das nicht initialisierte recycelte Produkt ist.

9. Aufzeichnungsgerät gemäß Anspruch 8,
wobei der Hauptkörper (200) des Aufzeichnungsgeräts weiterhin einen Hauptkörper-Speicher (215) umfasst, der einen Anfangswert der Nutzungsmenge für jede der mehreren Arten von Verbrauchsmaterialien in einem Recyclingabschlusszustand speichert, und
wobei der Prozessor (210) weiterhin so konzipiert ist, dass er eine erste Initialisierungsbefehl-Übertragungsverarbeitung ausführt, bei der ein erster Initialisierungsbefehl zum Schreiben des aus dem Hauptkörper-Speicher (215) erworbenen Anfangswerts der Nutzungsmenge in den zweiten Speicherbereich (132) des Verbrauchsmaterial-Speichers (115) über die Kommunikationseinheit (285) an den Controller (110) übertragen wird, um den Wert der Nutzungsmenge-Information zu initialisieren.

10. Aufzeichnungsgerät gemäß Anspruch 9,
wobei der Prozessor (210) weiterhin so konzipiert ist, dass er:
über die Kommunikationseinheit (285) an den Controller (110) einen ersten Übertragungsbefehl zum Auslesen und Übertragen der Recyclingshistorie-Information und der Kapazitäts-Information aus dem ersten Speicherbereich (131) und dem dritten Speicherbereich (133) des Verbrauchsmaterial-Speichers (115) überträgt, um die Recyclingshistorie-Information und Kapazitäts-Informationen zu erwerben, die vom Controller (110) als Reaktion auf den ersten Übertragungsbefehl übertragen werden, in der ersten Erwerbsverarbeitung;
zweite Erwerbsverarbeitung ausführt, um von dem Hauptkörper-Speicher (215) den Anfangswert der Nutzungsmenge zu erwerben, der den aus dem Controller (110) des Verbrauchsmaterial-Speichers (115) erworbenen Kapazitäts-Information entspricht; und
über die Kommunikationseinheit (285) den in der zweiten Erwerbsverarbeitung erworbenen Anfangswert der Nutzungsmenge an den Controller (110) überträgt, in der ersten Initialisierungsbefehl-Übertragungsverarbeitung.

11. Aufzeichnungsgerät gemäß Anspruch 8,
wobei der Prozessor (210) weiterhin so konzipiert ist, dass er:
über die Kommunikationseinheit (285) an den Controller (110) einen zweiten Übertragungsbefehl zum Auslesen der Recyclingshistorie-Information und des Anfangswerts der Nutzungsmenge aus dem ersten Speicherbereich (131) und dem vierten Speicherbereich (233) des Verbrauchsmaterial-Speichers (115) überträgt, um die Recyclingshistorie-Information und den Anfangswert der Nutzungsmenge zu erwerben, die vom Controller (110) als Reaktion auf den zweiten Übertragungsbefehl übertragen werden, in der ersten Erwerbsverarbeitung; und
eine zweite Initialisierungsbefehl-Übertragungsverarbeitung ausführt, bei der ein zweiter Initialisierungsbefehl zum Schreiben des erworbenen Anfangswerts der Nutzungsmenge in den zweiten Speicherbereich (132) des Verbrauchsmaterial-Speichers (115) über die Kommunikationseinheit (285) an den Controller (110) übertragen wird, um den Wert der Nutzungsmenge-Information zu initialisieren.

12. Aufzeichnungsgerät gemäß Anspruch 8,
wobei der Prozessor (210) weiterhin so konzipiert ist, dass er:
über die Kommunikationseinheit (285) an den Controller (210) einen dritten Übertragungsbefehl zum Auslesen und Übertragen der Recyclingshistorie-Information aus dem ersten Speicherbereich (131) des Verbrauchsmaterial-Speichers (115) überträgt, um die Recyclingshistorie-Information zu erwerben, die vom Controller (110) als Reaktion auf den dritten Übertragungsbefehl übertragen wird, in der ersten Erwerbsverarbeitung; und
eine dritte Initialisierungsbefehl-Übertragungsverarbeitung ausführt, bei der ein dritter Initialisierungsbefehl zum Auslesen des im vierten Speicherbereich (233) des Verbrauchsmaterial-Speichers (115) gespeicherten Anfangswerts der Nutzungsmenge und Schreiben des ausgelesenen Anfangswerts der Nutzungsmenge in den zweiten Speicherbereich (132) des Verbrauchsmaterial-Speichers (115), über die Kommunikationseinheit (285) an den Controller (110) übertragen wird, um den Wert der Nutzungsmenge-Information zu initialisieren, in einem Fall des Erwerbs der Recyclingshistorie-Information.

13. Informationsverarbeitungsverfahren zum Durchführen einer vorgegebenen Verarbeitung an Nutzungsmenge-Information eines Verbrauchsmaterials, das in einem Verbrauchsmaterial (50) gemäß einem beliebigen der Ansprüche 1 bis 4 enthalten ist, und an Recyclingshistorie-Information des Verbrauchsmaterials (50), wobei die Nutzungsmenge-Information und die Recyclingshistorie-Information in einem Verbrauchsmaterial-Speicher (115) des Verbrauchsmaterials (50) gespeichert sind, das so konzipiert ist, dass es abnehmbar an einem Hauptkörper eines Aufzeichnungsgeräts angebracht werden kann, wobei das Informationsverarbeitungsverfahren die folgenden Schritte umfasst:
Erwerben der Recyclingshistorie-Information aus dem Verbrauchsmaterial-Speicher (115) durch Kommunikation (S10); und
Bestimmen, ob eine Initialisierungsverarbeitung zur Initialisierung eines Wertes der Nutzungsmenge-Information, die im Verbrauchsmaterial-Speicher (115) gespeichert ist, durchgeführt werden soll (S15, S20), gemäß der erworbenen Recyclingshistorie-Information.

14. Informationsverarbeitungsverfahren gemäß Anspruch 13,
wobei die Recyclingshistorie-Information Folgendes umfasst:
einen ersten Informationsteil, der angibt, ob das Verbrauchsmaterial (50) ein recyceltes Produkt mit einer Recyclingshistorie oder ein brandneues Produkt ohne Recyclingshistorie ist; und
einen zweiten Informationsteil, der angibt, ob das Verbrauchsmaterial (50) ein initialisiertes recyceltes Produkt mit einer Initialisierungshistorie der Nutzungsmenge-Information oder ein nicht initialisiertes recyceltes Produkt ohne Initialisierungshistorie ist, in einem Fall, in dem das Verbrauchsmaterial (50) das recycelte Produkt ist, und
wobei im Bestimmungsschritt bestimmt wird, dass die Initialisierungsverarbeitung nicht durchgeführt werden soll, in einem Fall, in dem die erworbene Recyclingshistorie-Information angibt, dass das Verbrauchsmaterial (50) das initialisierte recycelte Produkt oder das brandneue Produkt ist.

15. Informationsverarbeitungsverfahren gemäß Anspruch 14, wobei im Bestimmungsschritt (S15, S20) bestimmt wird, dass die Initialisierungsverarbeitung (S30) durchgeführt wird, in einem Fall, in dem die erworbenen Recyclingshistorie-Information angibt, dass das Verbrauchsmaterial (50) das nicht initialisierte recycelte Produkt (S20) ist.

## Revendications

1. Consommable (50) pour un appareil d'enregistrement, le consommable étant conçu pour être fixé de manière amovible à un corps principal (200) de l'appareil d'enregistrement et comprenant une mémoire de consommable (115) configurée pour communiquer avec l'appareil d'enregistrement et un contrôleur (110) configuré pour contrôler la lecture et l'écriture d'informations concernant la mémoire de consommable (115),
où la mémoire de consommable (115) comprend :
une première zone de stockage (131) dans laquelle sont stockées des informations d'historique de recyclage du consommable (50), les informations d'historique de recyclage comprenant une première partie d'information représentant si le consommable (50) est un produit recyclé avec un historique de recyclage ou un produit neuf sans historique de recyclage, et une deuxième partie d'information représentant si le consommable (50) est un produit recyclé initialisé avec un historique d'initialisation des informations de quantité d'utilisation d'un matériau consommable inclus dans le consommable (50) ou un produit recyclé non initialisé sans historique d'initialisation, dans le cas où le consommable (50) est le produit recyclé, où la quantité de matériau consommable restant ou la durée de vie restante ou la quantité de matériau consommable utilisé ou le temps utilisé est appelée "quantité d'utilisation" et l'information représentant la "quantité d'utilisation" est appelée "information de quantité d'utilisation" et où "initialisation" signifie que la valeur initiale de l'information de quantité d'utilisation est écrite comme une quantité de matériau consommable ou une durée de vie qui peut être utilisée à nouveau en tant que produit recyclé ;
une deuxième zone de stockage (132) dans laquelle l'information de quantité d'utilisation est stockée ; et
l'une quelconque des zones de stockage d'une troisième zone de stockage (133) dans laquelle des informations de capacité du consommable (50) sont stockées et d'une quatrième zone de stockage (233) dans laquelle une valeur initiale de quantité d'utilisation du consommable (50) dans un état de recyclage complet est stockée, et
où le contrôleur (110) est configuré pour effectuer un traitement d'écriture d'information de quantité d'utilisation consistant à écrire une valeur initiale prédéterminée de quantité d'utilisation dans la deuxième zone de stockage (132), en réponse à la réception d'une commande transmise depuis l'appareil d'enregistrement.

2. Consommable (50) pour l'appareil d'enregistrement selon la revendication 1,
où, en réponse à la réception d'une première commande de transmission transmise depuis l'appareil d'enregistrement, le contrôleur (110) est configuré pour lire les informations d'historique de recyclage et les informations de capacité depuis la première zone de stockage (131) et la troisième zone de stockage (133), pour transmettre les informations d'historique de recyclage lues et les informations de capacité lues à l'appareil d'enregistrement, et
où, en réponse à la réception d'une première commande d'initialisation en tant que commande, le contrôleur (110) est configuré pour écrire la valeur initiale de quantité d'utilisation incluse dans la première commande d'information et correspondant aux informations de capacité dans la deuxième zone de stockage (132), pour initialiser une valeur de l'information de quantité d'utilisation.

3. Consommable (50) pour l'appareil d'enregistrement selon la revendication 1,
où, en réponse à la réception d'une deuxième commande de transmission transmise depuis l'appareil d'enregistrement, le contrôleur (110) est configuré pour lire les informations d'historique de recyclage et la valeur initiale de quantité d'utilisation depuis la première zone de stockage (131) et la quatrième zone de stockage (233), pour transmettre les informations d'historique de recyclage lues et la valeur initiale de quantité d'utilisation lue à l'appareil d'enregistrement, et
où, en réponse à la réception d'une deuxième commande d'initialisation en tant que commande, le contrôleur (110) est configuré pour écrire la valeur initiale de quantité d'utilisation incluse dans la deuxième commande d'initialisation dans la deuxième zone de stockage (132), pour initialiser une valeur de l'information de quantité d'utilisation.

4. Consommable pour l'appareil d'enregistrement selon la revendication 1,
où, en réponse à la réception d'une troisième commande de transmission transmise depuis l'appareil d'enregistrement, le contrôleur (110) est configuré pour lire les informations d'historique de recyclage depuis la première zone de stockage (131), pour transmettre les informations d'historique de recyclage lues à l'appareil d'enregistrement, et
où, en réponse à la réception d'une troisième commande d'initialisation en tant que commande, le contrôleur (110) est configuré pour lire la valeur initiale de quantité d'utilisation stockée dans la quatrième zone de stockage (233) et écrire la valeur initiale de quantité d'utilisation lue dans la deuxième zone de stockage (132), pour initialiser une valeur de l'information de quantité d'utilisation.

5. Appareil d'enregistrement comprenant :
un corps principal (200) de l'appareil d'enregistrement ; et
le consommable (50) selon l'une quelconque des revendications 1 à 4,
où le corps principal (200) de l'appareil d'enregistrement comprend une unité de communication (285) configurée pour communiquer avec la mémoire de consommable (115), et un processeur (210), et
où le processeur (210) est configuré pour effectuer :
un premier traitement d'acquisition consistant à acquérir les informations d'historique de recyclage depuis la mémoire de consommable (115) du consommable (50) monté sur le corps principal (200) de l'appareil d'enregistrement par communication via l'unité de communication (285) ; et
un traitement de détermination consistant à déterminer s'il faut ou non effectuer un traitement d'initialisation consistant à initialiser une valeur de l'information de quantité d'utilisation stockée dans la mémoire de consommable (115), selon les informations d'historique de recyclage acquises.

6. Appareil d'enregistrement selon la revendication 5, où les informations d'historique de recyclage comprennent :
une première partie d'information représentant si le consommable (50) est un produit recyclé avec un historique de recyclage ou un produit neuf sans historique de recyclage ; et
une deuxième partie d'information représentant si le consommable (50) est un produit recyclé initialisé avec un historique d'initialisation des informations de quantité d'utilisation ou un produit recyclé non initialisé sans historique d'initialisation, dans le cas où le consommable (50) est le produit recyclé.

7. Appareil d'enregistrement selon la revendication 6, où le processeur (210) est configuré pour déterminer de ne pas effectuer le traitement d'initialisation dans le traitement de détermination, dans le cas où les informations d'historique de recyclage acquises indiquent que le consommable (50) est le produit recyclé initialisé ou que le consommable (50) est le produit neuf.

8. Appareil d'enregistrement selon la revendication 7, où le processeur est configuré pour déterminer de réaliser le traitement d'initialisation dans le traitement de détermination, dans le cas où les informations d'historique de recyclage acquises indiquent que le consommable (50) est le produit recyclé non initialisé.

9. Appareil d'enregistrement selon la revendication 8,
où le corps principal (200) de l'appareil d'enregistrement comprend en outre une mémoire principale (215) qui stocke une valeur initiale de quantité d'utilisation de chaque type de consommable dans un état de recyclage complet, et
où le processeur (210) est également configuré pour effectuer un traitement de transmission de première commande d'initialisation consistant à transmettre, au contrôleur (110) via l'unité de communication (285), une première commande d'initialisation pour écrire la valeur initiale de quantité d'utilisation acquise depuis la mémoire principale (215) dans la deuxième zone de stockage (132) de la mémoire de consommable (115) afin d'initialiser la valeur de l'information de quantité d'utilisation.

10. Appareil d'enregistrement selon la revendication 9,
où le processeur (210) est également configuré pour :
transmettre, au contrôleur (110) via l'unité de communication (285), une première commande de transmission pour lire et transmettre les informations d'historique de recyclage et les informations de capacité depuis la première zone de stockage (131) et la troisième zone de stockage (133) de la mémoire de consommable (115), pour acquérir les informations d'historique de recyclage et les informations de capacité transmises par le contrôleur (110) en réponse à la première commande de transmission, dans le premier traitement d'acquisition ;
effectuer un deuxième traitement d'acquisition consistant à acquérir, depuis la mémoire principale (215), la valeur initiale de quantité d'utilisation correspondant aux informations de capacité acquises depuis le contrôleur (110) de la mémoire de consommable (115) ; et
transmettre, au contrôleur (110) via l'unité de communication (285), la valeur initiale de quantité d'utilisation acquise depuis la mémoire principale (215) dans le deuxième traitement d'acquisition, dans le traitement de transmission de première commande d'initialisation.

11. Appareil d'enregistrement selon la revendication 8,
où le processeur (210) est également configuré pour :
transmettre, au contrôleur (110) via l'unité de communication (285), une deuxième commande de transmission pour lire et transmettre les informations d'historique de recyclage et la valeur initiale de quantité d'utilisation depuis la première zone de stockage (131) et la quatrième zone de stockage (233) de la mémoire de consommable (115), pour acquérir les informations d'historique de recyclage et la valeur initiale de quantité d'utilisation transmises par le contrôleur (110) en réponse à la deuxième commande de transmission, dans le premier traitement d'acquisition ; et
effectuer un traitement de transmission de deuxième commande d'initialisation consistant à transmettre, au contrôleur (110) via l'unité de communication (285), une deuxième commande d'initialisation pour écrire la valeur initiale de quantité d'utilisation acquise dans la deuxième zone de stockage (132) de la mémoire de consommable (115) afin d'initialiser la valeur de l'information de quantité d'utilisation.

12. Appareil d'enregistrement selon la revendication 8,
où le processeur (210) est également configuré pour :
transmettre, au contrôleur (210) via l'unité de communication (285), une troisième commande de transmission pour lire et transmettre les informations d'historique de recyclage depuis la première zone de stockage (131) de la mémoire de consommable (115), pour acquérir les informations d'historique de recyclage transmises par le contrôleur (110) en réponse à la troisième commande de transmission, dans le premier traitement d'acquisition ; et
effectuer un traitement de transmission de troisième commande d'initialisation consistant à transmettre, au contrôleur (110) via l'unité de communication (285), une troisième commande d'initialisation pour lire la valeur initiale de quantité d'utilisation stockée dans la quatrième zone de stockage (233) de la mémoire de consommable (115) et écrire la valeur initiale de quantité d'utilisation lue dans la deuxième zone de stockage (132) de la mémoire de consommable (115) afin d'initialiser la valeur de l'information de quantité d'utilisation, dans le cas de l'acquisition des informations d'historique de recyclage.

13. Procédé de traitement d'informations permettant d'effectuer un traitement prédéterminé sur des informations de quantité d'utilisation d'un matériau consommable inclus dans un consommable (50) selon l'une quelconque des revendications 1 à 4 et sur des informations historiques de recyclage du consommable (50), les informations de quantité d'utilisation et les informations d'historique de recyclage étant stockées dans une mémoire de consommable (115) du consommable (50) conçu pour être fixé de manière amovible à un corps principal d'un appareil d'enregistrement, le procédé de traitement d'informations comprenant les étapes suivantes consistant à:
acquérir les informations d'historique de recyclage depuis la mémoire de consommable (115) par communication (S10) ; et
déterminer s'il faut ou non effectuer un traitement d'initialisation consistant à initialiser une valeur de l'information de quantité d'utilisation stockée dans la mémoire de consommable (115), selon les informations d'historique de recyclage acquises (S15, S20).

14. Procédé de traitement d'informations selon la revendication 13,
où les informations d'historique de recyclage comprennent :
une première partie d'information représentant si le consommable (50) est un produit recyclé avec un historique de recyclage ou un produit neuf sans historique de recyclage ; et
une deuxième partie d'information représentant si le consommable (50) est un produit recyclé initialisé avec un historique d'initialisation des informations de quantité d'utilisation ou un produit recyclé non initialisé sans historique d'initialisation, dans le cas où le consommable (50) est le produit recyclé, et
où il est déterminé de ne pas effectuer le traitement d'initialisation dans l'étape de détermination, dans le cas où les informations d'historique de recyclage acquises indiquent que le consommable (50) est le produit recyclé initialisé ou que le consommable (50) est le produit neuf.

15. Procédé de traitement d'informations selon la revendication 14, où il est déterminé de réaliser le traitement d'initialisation (S30) dans l'étape de détermination (S15, S20), dans le cas où les informations d'historique de recyclage acquises indiquent que le consommable (50) est le produit recyclé non initialisé (S20).
